# EUROPEAN PATENT APPLICATION

(11) **EP 4 521 813 A1**
(43) Date of publication of application: **12.03.2025**
(21) Application number: 23829901.0
(22) Date of filing: 09.06.2023
(51) Int. Cl.: H04W 24/10

(54) **COMMUNICATION METHOD AND COMMUNICATION APPARATUS**

(30) Priority: 27.06.2022 CN 202210737585
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Maiwald GmbH
(86) International application number: PCT/CN2023/099267
(87) International publication number: WO 2024/001717

(57) **Abstract**

This application provides a communication method and a communication apparatus. In a scenario in which a terminal device is separately connected to a first access network device and a second access network device (that is, in a dual-connectivity scenario), the first access network device can send first indication information to a measurement collection entity after receiving an application layer measurement result, where the first indication information indicates to associate the application layer measurement result with a radio side measurement result of the first access network device, and/or the first indication information indicates to associate the application layer measurement result with a radio side measurement result of the second access network device. The first indication information can indicate a radio side measurement result of an access network device with which the application layer measurement result is to be associated. Therefore, the measurement collection entity can accurately learn of, based on the first indication information, the radio side measurement result of the access network device with which the application layer measurement result is to be associated.

## Description

This application claims priority to Chinese Patent Application No. 202210737585.X, filed with the China National Intellectual Property Administration on June 27, 2022 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

Quality of experience (quality of experience, QoE) is a performance metric for evaluating user's comprehensive subjective experience on quality and performance (including effectiveness, availability, and the like) of a device, a network, a system, an application, or a service. Measurement of the quality of experience is referred to as QoE measurement (also referred to as application layer measurement). A terminal device may report, to a network side, an application layer measurement result obtained based on the application layer measurement, so that the network side learns of quality of service and performance of the terminal device and a status of user experience. In addition, the terminal device or an access network device may further perform radio side measurement. The radio side measurement is for measuring radio network performance of providing a service for the terminal device by at least one cell of the access network device. The terminal device may report, to the network side, a radio side measurement result obtained based on the radio side measurement, so that the network side learns of radio network performance of the terminal device. In addition, the network side may further associate an application layer measurement result and a radio side measurement result of a same service of a same terminal device, to help the network side better optimize the network to improve user experience.

Currently, after the access network device obtains the application layer measurement result and the radio side measurement result, the access network device may send both the application layer measurement result and identification information indicating the radio side measurement result to a measurement collection entity, so that the measurement collection entity associates the application layer measurement result with the radio side measurement result based on the application layer measurement result and the identification information indicating the radio side measurement result.

However, in a dual-connectivity (dual-connectivity, DC) (also referred to as multi-radio dual connectivity (multi-radio dual connectivity, MR-DC)) scenario, the terminal device is simultaneously connected to two access network devices (for example, base stations). How to associate the application layer measurement result with the radio side measurement result in the dual-connectivity scenario is an urgent problem to be resolved.

### SUMMARY

This application provides a communication method and a communication apparatus, to associate an application layer measurement result with a radio side measurement result in a dual-connectivity scenario.

According to a first aspect, this application provides a communication method. In the method, a terminal device can communicate with both a first access network device and a second access network device. That is, the terminal device performs dual connectivity to the first access network device and the second access network device. The first access network device can send first indication information to a measurement collection entity, where the first indication information indicates to associate an application layer measurement result from the terminal device with a radio side measurement result of the first access network device, and/or the first indication information indicates to associate the application layer measurement result with a radio side measurement result of the second access network device, so that the measurement collection entity determines, based on the first indication information, a radio side measurement result of an access network device with which the application layer measurement result is to be associated.

In this application, in a scenario in which the terminal device is connected to the first access network device and the second access network device (that is, in a dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate the radio side measurement result of the access network device with which the application layer measurement result is to be associated. Therefore, the measurement collection entity can accurately learn of, based on the first indication information, the radio side measurement result of the access network device with which the application layer measurement result is to be associated.

It should be noted that the measurement collection entity in this application may be replaced with a trace collection entity. For example, the first access network device sends the first indication information to the trace collection entity, so that the trace collection entity determines, based on the first indication information, the radio side measurement result of the access network device with which the application layer measurement result is to be associated.

In a possible implementation, before the first access network device sends the first indication information to the measurement collection entity, the method further includes: The first access network device obtains, from the terminal device, identification information of a service corresponding to the application layer measurement result, where the identification information of the service includes an identifier of a protocol data unit PDU session and/or an identifier of at least one quality of service QoS flow in the PDU session. The first access network device determines the first indication information based on the identification information of the service.

In this embodiment, it is proposed that the first indication information is determined based on the identification information of the service corresponding to the application layer measurement result. The first access network device can determine, based on the identification information of the service, a specific service of the terminal device. In addition, the first access network device knows radio bearers established by the first access network device for the terminal device and identifiers of services corresponding to the radio bearers. In this way, the first access network device can learn of a radio bearer type of the service based on the first indication information. Therefore, whether the service relates to the first access network device and/or the second access network device can be accurately determined based on the identification information of the service. Further, the first access network device can accurately determine the first indication information, and further improves accuracy of associating the application layer measurement result with the radio side measurement result by the measurement collection entity.

In a possible implementation, before the first access network device sends the first indication information to the measurement collection entity, the method further includes: The first access network device obtains a radio bearer type of a service corresponding to the application layer measurement result. The first access network device determines the first indication information based on the radio bearer type.

The radio bearer type indicates an access network device that corresponds to a radio bearer for communicating the service and that is in the first access network device and the second access network device.

For example, the radio bearer type includes a master cell group bearer, a secondary cell group bearer, and a split bearer.

For example, the radio bearer type includes an MN terminated master cell group bearer, an MN terminated secondary cell group bearer, an MN terminated split bearer, an SN terminated master cell bearer, an SN terminated secondary cell bearer, and an SN terminated split bearer.

In this implementation, the first access network device can accurately determine, based on the radio bearer type of the service, whether the service relates to the first access network device and/or the second access network device. Further, the first access network device can accurately determine the first indication information. This further improves accuracy of associating the application layer measurement result with the radio side measurement result by the measurement collection entity.

In a possible example of this implementation, the first access network device determines, based on identification information of the service corresponding to the application layer measurement result, the radio bearer type of the service corresponding to the application layer measurement result. The identification information of the service includes an identifier of a protocol data unit PDU session and/or an identifier of at least one quality of service QoS flow in the PDU session.

In a possible implementation, the first indication information is located in a first message, and the first message includes a quality of experience QoE reference configured by a core network device or a network management device.

Optionally, the first message includes the application layer measurement result and/or information identifying application layer measurement corresponding to the application layer measurement result. The information identifying the application layer measurement corresponding to the application layer measurement result includes the quality of experience QoE reference configured by the core network device or the network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the first indication information includes the radio bearer type of the service corresponding to the application layer measurement result.

For example, the radio bearer type is any one of a master cell group bearer, a secondary cell group bearer, or a split bearer.

If the first indication information includes the master cell group bearer, the first indication information indicates the measurement collection entity to associate the application layer measurement result with a radio side measurement result of a master access network device in the first access network device and the second access network device; if the first indication information includes the secondary cell group bearer, the first indication information indicates the measurement collection entity to associate the application layer measurement result with a radio side measurement result of a secondary access network device in the first access network device and the second access network device; or if the first indication information includes the split bearer, the first indication information indicates the measurement collection entity to separately associate the application layer measurement result with the radio side measurement result of the first access network device and the radio side measurement result of the second access network device.

For example, the radio bearer type is any one of the MN terminated master cell group bearer, the MN terminated secondary cell group bearer, the MN terminated split bearer, the SN terminated master cell bearer, the SN terminated secondary cell bearer, and the SN terminated split bearer.

For example, if the radio bearer type included in the first indication information is the MN terminated master cell group bearer, the first indication information indicates to associate the application layer measurement result with the radio side measurement result of the master access network device (namely, a master node) in the first access network device and the second access network device; if the radio bearer type included in the first indication information is the SN terminated secondary cell group bearer, the first indication information indicates to associate the application layer measurement result with the radio side measurement result of the secondary access network device (namely, a secondary node) in the first access network device and the second access network device; or if the radio bearer type included in the first indication information is any one of the MN terminated split bearer, the SN terminated split bearer, the MN terminated secondary cell group bearer, and the SN terminated master cell group bearer, the first indication information indicates to separately associate the application layer measurement result with the radio side measurement result of the first access network device and the radio side measurement result of the second access network device.

In a possible implementation, the first indication information includes an identifier of the first access network device and/or an identifier of the second access network device.

If the first indication information includes the identifier of the first access network device, the first indication information indicates the measurement collection entity to associate the application layer measurement result with the radio side measurement result of the first access network device; if the first indication information includes the identifier of the second access network device, the first indication information indicates the measurement collection entity to associate the application layer measurement result with the radio side measurement result of the second access network device; or if the first indication information includes the identifier of the first access network device and the identifier of the second access network device, the first indication information indicates the measurement collection entity to separately associate the application layer measurement result with the radio side measurement result of the first access network device and the radio side measurement result of the second access network device.

In a possible implementation, the first indication information includes information indicating one access network device or information indicating two access network devices.

If the first indication information includes the information indicating one access network device, the first indication information indicates the measurement collection entity to associate the application layer measurement result with the radio side measurement result of the first access network device or the second access network device; or if the first indication information includes the information indicating two access network devices, the first indication information indicates the measurement collection entity to associate the application layer measurement result with the radio side measurement results of the first access network device and the second access network device.

In a possible implementation, the method further includes: The first access network device sends second indication information to the second access network device, where the second indication information indicates the second access network device to trigger radio side measurement based on the second indication information.

For example, when the first access network device determines that a service of the application layer measurement relates to the second access network device, the first access network device triggers sending of the second indication information to the second access network device.

Optionally, the second indication information includes a radio side measurement configuration corresponding to the radio side measurement result.

In comparison with a solution in which the second access network device starts the radio side measurement when receiving radio side measurement configuration information in a conventional technology, in this embodiment, the second access network device does not immediately trigger a radio side measurement procedure when receiving the radio side measurement configuration information, but triggers the radio side measurement procedure when receiving the second indication information. Therefore, the first access network device can control, based on the second indication information, synchronization between the radio side measurement of the second access network device and the application layer measurement of the terminal device, to avoid a case in which the second access network device starts, before the terminal device starts an application layer measurement procedure, to perform the radio side measurement procedure.

According to a second aspect, this application further provides a communication method. In the method, a terminal device can communicate with both a first access network device and a second access network device. That is, the terminal device performs dual connectivity to the first access network device and the second access network device. A measurement collection entity receives first indication information from the first access network device, where the first indication information indicates to associate an application layer measurement result from the terminal device with a radio side measurement result of the first access network device, and/or the first indication information indicates to associate the application layer measurement result with a radio side measurement result of the second access network device. Then, the measurement collection entity associates the application layer measurement result with the radio side measurement result of the first access network device based on the first indication information, and/or associates the application layer measurement result with the radio side measurement result of the second access network device based on the first indication information.

It should be noted that the measurement collection entity in implementations of this aspect may be replaced with a trace collection entity.

In a possible implementation, the first indication information is located in a first message, and the first message includes a quality of experience QoE reference configured by a core network device or a network management device.

Optionally, the first message includes the application layer measurement result and/or information identifying application layer measurement corresponding to the application layer measurement result. The information identifying the application layer measurement corresponding to the application layer measurement result includes the quality of experience QoE reference configured by the core network device or the network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the method further includes: When the first indication information indicates to associate the application layer measurement result with the radio side measurement result of the second access network device, the measurement collection entity receives, from the second access network device, the quality of experience QoE reference configured by the core network device or the network management device and the radio side measurement result determined by the second access network device based on a radio side measurement configuration.

In a possible implementation, the first indication information includes a radio bearer type of a service corresponding to the application layer measurement result, and the radio bearer type includes a master cell group bearer, a secondary cell group bearer, or a split bearer.

In a possible example of this implementation, when the first indication information includes the master cell group bearer, the measurement collection entity associates the application layer measurement result with a radio side measurement result of a master access network device in the first access network device and the second access network device.

In another possible example of this implementation, when the first indication information includes the secondary cell group bearer, the measurement collection entity associates the application layer measurement result with a radio side measurement result of a secondary access network device in the first access network device and the second access network device.

In another possible example of this implementation, when the first indication information includes the split bearer, the measurement collection entity separately associates the application layer measurement result with the radio side measurement result of the first access network device and the radio side measurement result of the second access network device.

In a possible implementation, the first indication information includes an identifier of the first access network device and/or an identifier of the second access network device.

In a possible example of this implementation, when the first indication information includes the identifier of the first access network device, the measurement collection entity associates the application layer measurement result with the radio side measurement result of the first access network device.

In another possible example of this implementation, when the first indication information includes the identifier of the second access network device, the measurement collection entity associates the application layer measurement result with the radio side measurement result of the second access network device.

In another possible example of this implementation, when the first indication information includes the identifier of the first access network device and the identifier of the second access network device, the measurement collection entity separately associates the application layer measurement result with the radio side measurement result of the first access network device and the radio side measurement result of the second access network device.

In a possible implementation, the first indication information includes information indicating one access network device or information indicating two access network devices.

In a possible example of this implementation, when the first indication information includes the information indicating one access network device, the measurement collection entity associates the application layer measurement result with the radio side measurement result of the first access network device or the second access network device.

In another possible example of this implementation, when the first indication information includes the information indicating two access network devices, the measurement collection entity associates the application layer measurement result with the radio side measurement results of the first access network device and the second access network device.

It should be noted that there are further a plurality of other specific implementations in this embodiment of this application. For details, refer to the specific implementations of the first aspect and beneficial effects thereof. Details are not described herein again.

According to a third aspect, this application further provides a communication method. In the method, a terminal device can communicate with both a first access network device and a second access network device. That is, the terminal device performs dual connectivity to the first access network device and the second access network device. The first access network device obtains a first access network-visible application layer measurement result from the terminal device. Then, the first access network device sends a second access network-visible application layer measurement result to the second access network device based on a request message from the second access network device, where the request message is for requesting a second access network-visible application layer measurement metric corresponding to the second access network-visible application layer measurement result, and the second access network-visible application layer measurement result is determined based on the first access network-visible application layer measurement result and the second access network-visible application layer measurement metric.

In this embodiment, the first access network device can provide, based on the request message from the second access network device, the second access network device with the measurement result that is of the access network-visible application layer measurement metric and that is needed by the second access network device, so that the first access network device can send, to the second access network device based on the access network-visible application layer measurement result (namely, the first access network-visible application layer measurement result) received from the terminal device, the access network-visible application layer measurement result (namely, the second access network-visible application layer measurement result) needed by the second access network device. This helps reduce signaling overheads caused by obtaining, by the second access network device from the terminal device, the access network-visible application layer measurement result needed by the second access network device.

In a possible implementation, before the first access network device sends the second access network-visible application layer measurement result to the second access network device based on the request message from the second access network device, the method further includes: The first access network device sends a second message to the second access network device, where the second message includes at least one access network-visible application layer measurement metric that can be configured by the first access network device for the terminal device and/or at least one access network-visible application layer measurement metric that has been configured by the first access network device for the terminal device.

In a possible implementation, the second message further includes a reporting periodicity of access network-visible application layer measurement or application layer measurement starting indication information.

In a possible implementation, the method further includes: The first access network device receives a third message from the second access network device, where the third message is for notifying the first network device to cancel feeding back the second access network-visible application layer measurement metric to the second access network device.

In a possible implementation, the method further includes: The first access network device sends a fourth message to the second access network device, where the fourth message indicates that the access network-visible application layer measurement has been stopped.

In a possible implementation, the method further includes: The first access network device obtains identification information of a service corresponding to the first access network-visible application layer measurement result, where the identification information of the service includes an identifier of a protocol data unit PDU session and/or an identifier of at least one quality of service QoS flow in the PDU session. The first access network device determines the second message based on the identification information of the service.

In a possible implementation, the method further includes: The first access network device obtains a radio bearer type of a service corresponding to the first access network-visible application layer measurement result. The first access network device determines the second message based on the radio bearer type.

According to a fourth aspect, this application further provides a communication method. In the method, a terminal device can communicate with both a first access network device and a second access network device. That is, the terminal device performs dual connectivity to the first access network device and the second access network device. The second access network device sends a request message to the first access network device, where the request message is for requesting a second access network-visible application layer measurement metric. The second access network device receives a second access network-visible application layer measurement result from the first access network device, where the second access network-visible application layer measurement result is determined based on a first access network-visible application layer measurement result from the terminal device and the second access network-visible application layer measurement metric.

In a possible implementation, before the second access network device receives the second access network-visible application layer measurement result from the first access network device, the method further includes: The second access network device receives a second message from the first access network device, where the second message includes at least one access network-visible application layer measurement metric that can be configured by the first access network device for the terminal device and/or at least one access network-visible application layer measurement metric that has been configured by the first access network device for the terminal device.

In a possible implementation, the second message further includes a reporting periodicity of access network-visible application layer measurement or application layer measurement starting indication information.

In a possible implementation, the method further includes: The second access network device sends a third message to the second access network device, where the third message is for notifying the first network device to cancel feeding back the second access network-visible application layer measurement metric to the second access network device.

In a possible implementation, the method further includes: The second access network device receives a fourth message from the first access network device, where the fourth message indicates that the access network-visible application layer measurement has been stopped.

It should be noted that there are further a plurality of other specific implementations in this embodiment of this application. For details, refer to the specific implementations of the third aspect and beneficial effects thereof. Details are not described herein again.

According to a fifth aspect, this application further provides a communication method. In the method, a terminal device can communicate with both a first access network device and a second access network device. That is, the terminal device performs dual connectivity to the first access network device and the second access network device. The first access network device determines that a service corresponding to an access network-visible application layer measurement configuration of the terminal device relates to the second access network device. Then, the first access network device sends at least one access network-visible application layer measurement metric of the terminal device to the second access network device.

In this embodiment, the first access network device can send the at least one access network-visible application layer measurement metric to the second access network device, and the second access network device determines which access network-visible application layer measurement metrics are to be configured for the terminal device. Therefore, on a basis of ensuring that an application layer measurement configuration (for example, an access network-invisible application layer measurement configuration) has been configured for the terminal device, the second access network device can flexibly configure access network-visible application layer measurement based on a requirement of the second access network device. This helps reduce signaling overheads between the first access network device and the terminal device.

In a possible implementation, before the first access network device determines that the service corresponding to the access network-visible application layer measurement configuration relates to the second access network device, the method further includes: The first access network device obtains, from the terminal device, identification information of the service corresponding to the access network-visible application layer measurement configuration, where the identification information of the service includes an identifier of a protocol data unit PDU session and/or an identifier of at least one quality of service QoS flow in the PDU session. That the first access network device determines that the service corresponding to the access network-visible application layer measurement configuration relates to the second access network device includes: The first access network device determines, based on the identification information of the service, that the service corresponding to the access network-visible application layer measurement configuration relates to the second access network device.

In a possible implementation, before the first access network device determines that the service corresponding to the application layer measurement configuration relates to the second access network device, the method further includes: The first access network device obtains a radio bearer type of the service corresponding to the access network-visible application layer measurement configuration of the terminal device. That the first access network device determines that the service corresponding to the application layer measurement configuration relates to the second access network device includes: When the radio bearer type indicates that an access network device corresponding to a radio bearer for communicating the service includes the second access network device, the first access network device determines that the service corresponding to the application layer measurement configuration relates to the second access network device.

In a possible implementation, that the first access network device obtains the radio bearer type of the service corresponding to the access network-visible application layer measurement configuration of the terminal device includes: The first access network device determines the radio bearer type of the service based on identification information of the service, where the identification information of the service includes an identifier of a protocol data unit PDU session and/or an identifier of at least one quality of service QoS flow in the PDU session.

According to a sixth aspect, this application further provides a communication method. In the method, a terminal device can communicate with both a first access network device and a second access network device. That is, the terminal device performs dual connectivity to the first access network device and the second access network device. The second access network device receives at least one access network-visible application layer measurement metric of the terminal device from the first access network device. The second access network device sends the at least one access network-visible application layer measurement metric to the terminal device. The second access network device receives, from the terminal device, an access network-visible application layer measurement result determined based on the at least one access network-visible application layer measurement metric.

According to a seventh aspect, this application provides a communication apparatus. The communication apparatus is a first access network device. The communication apparatus includes a transceiver module and a processing module. The processing module is configured to determine first indication information. The transceiver module is configured to send the first indication information to a measurement collection entity, where the first indication information indicates to associate an application layer measurement result from a terminal device with a radio side measurement result of the first access network device, and/or the first indication information indicates to associate the application layer measurement result with a radio side measurement result of a second access network device; and the terminal device is separately connected to the first access network device and the second access network device.

In a possible implementation, the transceiver module is further configured to obtain, from the terminal device, identification information of a service corresponding to the application layer measurement result, where the identification information of the service includes an identifier of a protocol data unit PDU session and/or an identifier of at least one quality of service QoS flow in the PDU session. In addition, the processing module is further configured to determine the first indication information based on the identification information of the service.

In a possible implementation, the transceiver module is further configured to obtain a radio bearer type of a service corresponding to the application layer measurement result. In addition, the processing module is further configured to determine the first indication information based on the radio bearer type.

In a possible implementation, the first indication information is located in a first message, and the first message includes a quality of experience QoE reference configured by a core network device or a network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the first indication information includes the radio bearer type of the service corresponding to the application layer measurement result, and the radio bearer type includes a master cell group bearer, a secondary cell group bearer, or a split bearer.

In a possible implementation, the first indication information includes an identifier of the first access network device and/or an identifier of the second access network device.

In a possible implementation, the first indication information includes information indicating one access network device or information indicating two access network devices.

In a possible implementation, the transceiver module is further configured to send second indication information to the second access network device, where the second indication information indicates the second access network device to trigger radio side measurement based on the second indication information.

In a possible implementation, the second indication information includes a radio side measurement configuration corresponding to the radio side measurement result.

It should be noted that there are further a plurality of other specific implementations in this embodiment of this application. For details, refer to the specific implementations of the first aspect and beneficial effects thereof. Details are not described herein again.

According to an eighth aspect, this application provides a communication apparatus. The communication apparatus is a measurement collection entity. The communication apparatus includes a transceiver module and a processing module. The transceiver module is configured to receive first indication information from a first access network device, where the first indication information indicates to associate an application layer measurement result from a terminal device with a radio side measurement result of the first access network device, and/or the first indication information indicates to associate the application layer measurement result with a radio side measurement result of a second access network device; and the terminal device is separately connected to the first access network device and the second access network device. The processing module is configured to associate the application layer measurement result with the radio side measurement result of the first access network device based on the first indication information, and/or associating the application layer measurement result with the radio side measurement result of the second access network device based on the first indication information.

In a possible implementation, the first indication information is located in a first message, and the first message includes a quality of experience QoE reference configured by a core network device or a network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the transceiver module is further configured to: when the first indication information indicates to associate the application layer measurement result with the radio side measurement result of the second access network device, receive, from the second access network device, the quality of experience QoE reference configured by the core network device or the network management device and the radio side measurement result determined by the second access network device based on a radio side measurement configuration.

In a possible implementation, the first indication information includes a radio bearer type of a service corresponding to the application layer measurement result, and the radio bearer type includes a master cell group bearer, a secondary cell group bearer, or a split bearer.

The processing module is specifically configured to: when the first indication information includes the master cell group bearer, associate the application layer measurement result with a radio side measurement result of a master access network device in the first access network device and the second access network device;
the processing module is specifically configured to: when the first indication information includes the secondary cell group bearer, associate the application layer measurement result with a radio side measurement result of a secondary access network device in the first access network device and the second access network device; or
the processing module is specifically configured to: when the first indication information includes the split bearer, separately associate the application layer measurement result with the radio side measurement result of the first access network device and the radio side measurement result of the second access network device.

In a possible implementation, the first indication information includes an identifier of the first access network device and/or an identifier of the second access network device.

The processing module is specifically configured to: when the first indication information includes the identifier of the first access network device, associate the application layer measurement result with the radio side measurement result of the first access network device;
the processing module is specifically configured to: when the first indication information includes the identifier of the second access network device, associate the application layer measurement result with the radio side measurement result of the second access network device; or
the processing module is specifically configured to: when the first indication information includes the identifier of the first access network device and the identifier of the second access network device, separately associate the application layer measurement result with the radio side measurement result of the first access network device and the radio side measurement result of the second access network device.

In a possible implementation, the first indication information includes information indicating one access network device or information indicating two access network devices.

The processing module is specifically configured to: when the first indication information includes the information indicating one access network device, associate the application layer measurement result with the radio side measurement result of the first access network device or the second access network device; or
the processing module is specifically configured to: when the first indication information includes the information indicating two access network devices, associate the application layer measurement result with the radio side measurement results of the first access network device and the second access network device.

According to a ninth aspect, this application provides a communication apparatus. The communication apparatus is a first access network device. The communication apparatus includes a transceiver module and a processing module. The transceiver module is configured to obtain a first access network-visible application layer measurement result from a terminal device, where the terminal device is connected to the first access network device and a second access network device. The processing module is configured to send a second access network-visible application layer measurement result to the second access network device based on a request message from the second access network device, where the request message is for requesting a second access network-visible application layer measurement metric corresponding to the second access network-visible application layer measurement result, and the second access network-visible application layer measurement result is determined based on the first access network-visible application layer measurement result and the second access network-visible application layer measurement metric.

In a possible implementation, the transceiver module is further configured to send a second message to the second access network device, where the second message includes at least one access network-visible application layer measurement metric that can be configured by the first access network device for the terminal device and/or at least one access network-visible application layer measurement metric that has been configured by the first access network device for the terminal device.

In a possible implementation, the second message further includes a reporting periodicity of access network-visible application layer measurement or application layer measurement starting indication information.

In a possible implementation, the transceiver module is further configured to receive a third message from the second access network device, where the third message is for notifying the first network device to cancel feeding back the second access network-visible application layer measurement metric to the second access network device.

In a possible implementation, the transceiver module is further configured to send a fourth message to the second access network device, where the fourth message indicates that the access network-visible application layer measurement has been stopped.

In a possible implementation, the transceiver module is further configured to obtain identification information of a service corresponding to the first access network-visible application layer measurement result, where the identification information of the service includes an identifier of a protocol data unit PDU session and/or an identifier of at least one quality of service QoS flow in the PDU session. The processing module is further configured to determine the second message based on the identification information of the service.

In a possible implementation, the transceiver module is further configured to obtain a radio bearer type of a service corresponding to the first access network-visible application layer measurement result. The processing module is further configured to determine the second message based on the radio bearer type.

It should be noted that there are further a plurality of other specific implementations in this embodiment of this application. For details, refer to the specific implementations of the third aspect and beneficial effects thereof. Details are not described herein again.

According to a tenth aspect, this application provides a communication apparatus. The communication apparatus is a second access network device. The communication apparatus includes a transceiver module and a processing module. The processing module is configured to generate a request message. The transceiver module is configured to send the request message to a first access network device, where the request message is for requesting a second access network-visible application layer measurement metric. The transceiver module is further configured to receive a second access network-visible application layer measurement result from the first access network device, where the second access network-visible application layer measurement result is determined based on a first access network-visible application layer measurement result from a terminal device and the second access network-visible application layer measurement metric, and the terminal device is separately connected to the first access network device and the second access network device.

In a possible implementation, the transceiver module is further configured to receive a second message from the first access network device, where the second message includes at least one access network-visible application layer measurement metric that can be configured by the first access network device for the terminal device and/or at least one access network-visible application layer measurement metric that has been configured by the first access network device for the terminal device.

Optionally, the second message further includes a reporting periodicity of access network-visible application layer measurement or application layer measurement starting indication information.

In a possible implementation, the transceiver module is further configured to send a third message to the second access network device, where the third message is for notifying the first network device to cancel feeding back the second access network-visible application layer measurement metric to the second access network device.

In a possible implementation, the transceiver module is further configured to receive a fourth message from the first access network device, where the fourth message indicates that the access network-visible application layer measurement has been stopped.

According to an eleventh aspect, this application provides a communication apparatus. The communication apparatus is a first access network device. The communication apparatus includes a transceiver module and a processing module. The processing module is configured to determine that a service corresponding to an access network-visible application layer measurement configuration of a terminal device relates to a second access network device, where the terminal device is connected to the first access network device and the second access network device. The transceiver module is configured to send at least one access network-visible application layer measurement metric of the terminal device to the second access network device.

In a possible implementation, the transceiver module is further configured to obtain, from the terminal device, identification information of the service corresponding to the access network-visible application layer measurement configuration, where the identification information of the service includes an identifier of a protocol data unit PDU session and/or an identifier of at least one quality of service QoS flow in the PDU session. The processing module is specifically configured to determine, based on the identification information of the service, that the service corresponding to the access network-visible application layer measurement configuration relates to the second access network device.

In a possible implementation, the transceiver module is further configured to obtain a radio bearer type of the service corresponding to the access network-visible application layer measurement configuration of the terminal device. The processing module is specifically configured to: when the radio bearer type indicates that an access network device corresponding to a radio bearer for communicating the service includes the second access network device, determine that the service corresponding to the application layer measurement configuration relates to the second access network device.

In a possible implementation, the processing module is specifically configured to determine the radio bearer type of the service based on identification information of the service, where the identification information of the service includes an identifier of a protocol data unit PDU session and/or an identifier of at least one quality of service QoS flow in the PDU session.

It should be noted that there are further a plurality of other specific implementations in this embodiment of this application. For details, refer to the specific implementations of the fifth aspect and beneficial effects thereof. Details are not described herein again.

According to a twelfth aspect, this application provides a communication apparatus. The communication apparatus is a second access network device. The communication apparatus includes a transceiver module and a processing module. The transceiver module is configured to receive at least one access network-visible application layer measurement metric of a terminal device from a first access network device, where the terminal device is connected to the first access network device and the second access network device. The transceiver module is further configured to send the at least one access network-visible application layer measurement metric to the terminal device. The transceiver module is further configured to receive, from the terminal device, an access network-visible application layer measurement result determined based on the at least one access network-visible application layer measurement metric.

According to a thirteenth aspect, this application provides a communication apparatus. The communication apparatus may be the access network device (for example, the first access network device or the second access network device) in the foregoing implementations, or may be a chip in the access network device (for example, a chip in the first access network device or a chip in the second access network device). The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions. The processing module executes the instructions stored in the storage module, so that the first access network device performs the method in the first aspect, the third aspect, or the fifth aspect, and any one of the implementations of the foregoing aspects, or the second access network device performs the method in the fourth aspect or the sixth aspect, and any one of the implementations of the foregoing aspects. When the communication apparatus is the chip in the access network device, the processing module may be a processor, and the transceiver module may be an input/output interface, a pin, a circuit, or the like. The processing module executes instructions stored in a storage module, so that the first access network device performs the method in the first aspect, the third aspect, or the fifth aspect, and any one of the implementations of the foregoing aspects, or the second access network device performs the method in the fourth aspect or the sixth aspect, and any one of the implementations of the foregoing aspects. The storage module may be a storage module (for example, a register or a cache) in the chip, or may be a storage module (for example, a read-only memory or a random access memory) that is in the access network device and that is located outside the chip.

According to a fourteenth aspect, this application provides a communication apparatus. The communication apparatus may be the entity (for example, the measurement collection entity MCE or the trace collection entity TCE) that is configured to collect the application layer measurement result and/or the radio side measurement result and that is in the foregoing implementations. The communication apparatus may include a processing module and a transceiver module. When the communication apparatus is an access network device, the processing module may be a processor, and the transceiver module may be a transceiver. The access network device may further include a storage module, and the storage module may be a memory. The storage module is configured to store instructions. The processing module executes the instructions stored in the storage module, so that the measurement collection entity MCE or the trace collection entity TCE performs the method according to any one of the second aspect and the implementations of the second aspect. When the communication apparatus is a chip in an access network device, the processing module may be a processor, and the transceiver module may be an input/output interface, a pin, a circuit, or the like. The processing module executes instructions stored in a storage module, so that the measurement collection entity MCE or the trace collection entity TCE performs the method according to any one of the second aspect and the implementations of the second aspect. The storage module may be a storage module (for example, a register or a cache) in the chip, or may be a storage module (for example, a read-only memory or a random access memory) that is in the access network device and that is located outside the chip.

According to a fifteenth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method in the first aspect, the third aspect, or the fifth aspect, and any one of the implementations of the foregoing aspects or the method in the fourth aspect or the sixth aspect, and any one of the implementations of the foregoing aspects.

According to a sixteenth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the second aspect or the implementations of the second aspect.

According to a seventeenth aspect, an embodiment of this application provides a computer program product including instructions. When the computer program product runs on a computer, the computer is enabled to perform the method in the first aspect, the third aspect, the fourth aspect, the fifth aspect, the sixth aspect, and any one of the implementations of the foregoing aspects.

According to an eighteenth aspect, an embodiment of this application provides a computer program product including instructions. When the computer program product runs on a computer, the computer is enabled to perform the method in the second aspect and any one of the implementations of the foregoing aspects.

According to a nineteenth aspect, an embodiment of this application provides a computer-readable storage medium, including instructions. When the instructions are run on a computer, the computer is enabled to perform the method in the first aspect, the third aspect, the fourth aspect, the fifth aspect, the sixth aspect, and any one of the implementations of the foregoing aspects.

According to a twentieth aspect, an embodiment of this application provides a computer-readable storage medium, including instructions. When the instructions are run on a computer, the computer is enabled to perform the method in the second aspect and any one of the implementations of the foregoing aspects.

According to a twenty-first aspect, an embodiment of this application provides a communication system. The communication system includes the first access network device according to any one of the first aspect and the implementations of the first aspect and the measurement collection entity or the trace collection entity according to any one of the second aspect and the implementations of the second aspect. Alternatively, the communication system includes the first access network device according to any one of the third aspect and the implementations of the third aspect and the second access network device according to any one of the fourth aspect and the implementations of the fourth aspect. Alternatively, the communication system includes the first access network device according to any one of the fifth aspect and the implementations of the fifth aspect and the second access network device according to any one of the sixth aspect and the implementations of the sixth aspect.

It can be learned from the foregoing technical solutions that embodiments of this application have the following advantages.

In this application, in the scenario in which the terminal device is connected to the first access network device and the second access network device (that is, in the dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate the radio side measurement result of the access network device with which the application layer measurement result is to be associated. Therefore, the measurement collection entity can accurately learn of, based on the first indication information, the radio side measurement result of the access network device with which the application layer measurement result is to be associated.

### BRIEF DESCRIPTION OF DRAWINGS

To describe the technical solutions in embodiments of this application more clearly, the following briefly describes the accompanying drawings used in describing embodiments. It is definite that the accompanying drawings in the following descriptions show merely some embodiments of this application.
FIG. 1A is an example diagram of a system architecture of a communication method according to this application;
FIG. 1B is an example diagram of RRC entity distribution in a master node and a secondary node in a dual-connectivity scenario;
FIG. 1C is an example diagram of entity distribution in a master node and a secondary node in a dual-connectivity scenario;
FIG. 1D is another example diagram of entity distribution in a master node and a secondary node in a dual-connectivity scenario;
FIG. 2 is a flowchart of a communication method according to this application;
FIG. 3A and FIG. 3B are another flowchart of a communication method according to this application;
FIG. 4 is another flowchart of a communication method according to this application;
FIG. 5 is another flowchart of a communication method according to this application;
FIG. 6 is a diagram of an embodiment of a communication apparatus according to this application;
FIG. 7 is a diagram of another embodiment of a communication apparatus according to this application; and
FIG. 8 is a diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the terms used in such a way are interchangeable in appropriate circumstances, so that embodiments described herein can be implemented in orders other than the order illustrated or described herein. In addition, the terms "include" and "have" and any variant thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

The following first describes a system architecture and an application scenario to which a communication method provided in this application is applicable.

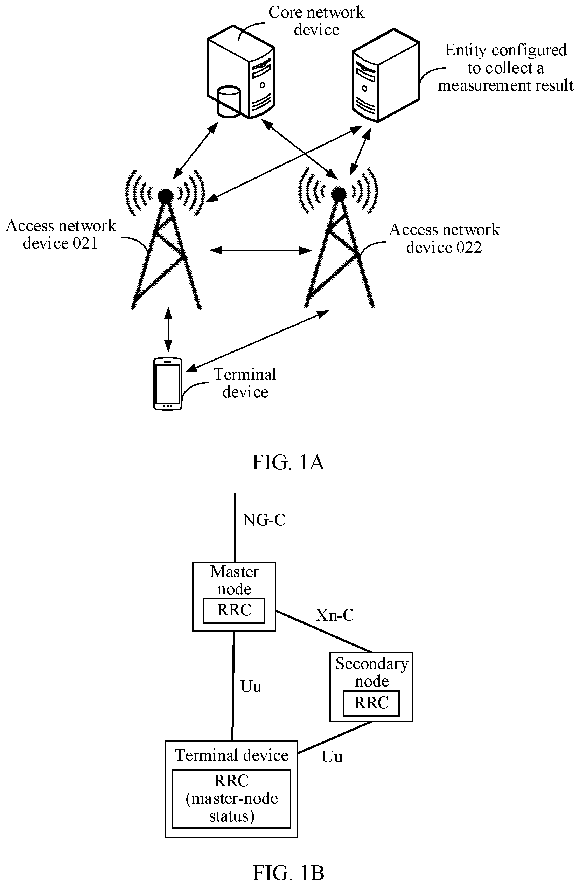

The communication method provided in this application may be applied to a 4th generation mobile communication technology (4th generation mobile communication technology, 4G) system, may be applied to a 5th generation mobile communication technology (5th generation mobile communication technology, 5G) system, or may be applied to a 6th generation mobile communication technology (6th generation mobile communication technology, 6G) and a subsequently evolved standard. This is not limited in this application. As shown in FIG. 1A, the communication system includes a terminal device, access network devices, a core network device, and an entity configured to collect a measurement result.

The terminal device includes a device that provides voice and/or data connectivity for a user. For example, the terminal device may include a handheld device having a wireless connection function, or a processing device connected to a wireless modem. The terminal device may communicate with a core network (for example, an evolved packet core (evolved packet core, EPC) or a 5G core (5th generation core, 5GC)) through a radio access network (radio access network, RAN), and may exchange a voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a remote station (remote station), an access point (access point, AP), a remote terminal (remote terminal), an access terminal (access terminal), a user terminal (user terminal), a user agent (user agent), a user device (user device), or the like. In addition, the terminal device may be a mobile phone (mobile phone), a tablet computer (Pad), a computer with a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. It should be understood that a specific technology and a specific device form used for the terminal device are not limited in embodiments of this application. The terminal device in this application may be any one of the foregoing devices or chips. This is not specifically limited herein. Regardless of being used as the device or the chip, the terminal device can be manufactured, sold, or used as an independent product. In this embodiment and subsequent embodiments, the terminal device is used as an example for description.

The access network device may be any device that has a wireless transceiver function, and may be configured to be responsible for a function related to an air interface, for example, a radio link maintenance function, a radio resource management function, and some mobility management functions. In addition, the access network device may be further configured with a baseband unit (base band unit, BBU), and has a baseband signal processing function. For example, the access network device may be an access network device (radio access network, RAN) that currently serves the terminal device. Currently, some common examples of the access network device are a NodeB (NodeB, NB), an evolved NodeB (evolved NodeB, eNB or eNodeB), and a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), and a home base station (for example, a home evolved NodeB (home evolved NodeB) or a home NodeB (home NodeB, HNB)). In addition, in a network structure such as a cloud radio access network (cloud radio access network, CloudRAN) or an open radio access network (open radio access network, ORAN), the access network device may be a device including a central unit (central unit, CU) (also referred to as a control unit) and/or a distributed unit (distributed unit, DU). The RAN device including the CU and the DU splits protocol layers of the gNB in the NR system. Functions of some protocol layers are centrally controlled by the CU, and functions of some or all of remaining protocol layers are distributed in the DU. The CU centrally controls the DU. It should be understood that the access network device in embodiments of this application may be any one of the foregoing devices or a chip in the foregoing device. This is not specifically limited herein. Regardless of being used as the device or the chip, the access network device can be manufactured, sold, or used as an independent product. In this embodiment and subsequent embodiments, the access network device is used as an example for description.

The core network device is a device in a core network (core network, CN) that provides service support for the terminal device. Currently, some common examples of the core network device are an access and mobility management function (access and mobility management function, AMF) entity, a session management function (session management function, SMF) entity, and a user plane function (user plane function, UPF) entity. Details are not listed one by one herein. The AMF entity may be responsible for access management and mobility management of the terminal device. The SMF entity may be responsible for session management, for example, user session establishment. The UPF entity may be a functional entity on a user plane, and is mainly responsible for connecting to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity.

The entity configured to collect a measurement result is an entity that receives an application layer measurement result from the access network device in an application layer measurement procedure and/or an entity that receives a radio side measurement result from the access network device in a radio side measurement procedure. For example, common entities configured to collect a measurement result include a measurement collection entity (measurement collection entity, MCE) and a trace collection entity (trace collection entity, TCE). Generally, the trace collection entity TCE collects the radio side measurement result from the access network device, and the measurement collection entity MCE collects the application layer measurement result from the access network device. Optionally, the trace collection entity TCE and the measurement collection entity MCE exchange signaling, and can exchange content such as the radio side measurement result and the application layer measurement result. Optionally, the network maintenance personnel may respectively obtain content such as the corresponding measurement results from the MCE and the TCE.

As shown in FIG. 1A, in the communication system, one terminal device can communicate with a plurality of access network devices (for example, an access network device 021 and an access network device 022). For example, the terminal device performs dual connectivity DC (also referred to as multi-radio dual connectivity MR-DC) to the access network device 021 and the access network device 022. The plurality of access network devices (for example, the access network device 021 and the access network device 022) may be access network devices that belong to a same radio access technology (radio access technology, RAT) (for example, the plurality of access network devices are all LTE nodes (for example, eNodeBs), the plurality of access network devices are all NR nodes (for example, gNodeBs), or the plurality of access network devices are all 6G nodes (for example, xNodeBs)). Alternatively, the plurality of access network devices may be access network devices of different RATs (for example, one is an LTE node (for example, an eNodeB), and the other is an NR node (for example, a gNodeB); or for another example, one is an NR node (for example, a gNodeB), and the other is a 6G node (for example, an xNodeB)). A network side may provide a communication service for the terminal device by using resources of the plurality of access network devices, so that the terminal device can perform high-rate transmission.

Generally, an access network device that is in the DC and that exchanges control plane signaling with the core network is referred to as a master node (master node, MN), and another access network device is referred to as a secondary node (secondary node, SN). As shown in FIG. 1B, both the master node and the secondary node in the DC have a radio resource control (radio resource control, RRC) entity, and can generate an RRC message. Alternatively, only the master node has an RRC entity, but both the master node and the secondary node can generate an RRC message. The master node may directly exchange an RRC message (for example, a message that carries information such as an application layer measurement configuration and a radio side measurement configuration and that is to be described hereinafter) with the terminal device through an interface between the terminal device and the master node (for example, a Uu interface between the terminal device and the master node). The secondary node may directly exchange an RRC message (for example, a message that carries information such as an access network-visible application layer measurement metric and the radio side measurement configuration and that is to be described hereinafter) with the terminal device through an interface between the terminal device and the secondary node (for example, a Uu interface between the terminal device and the secondary node). In addition, the secondary node may alternatively forward the RRC message between the secondary node and the terminal device via the master node. For example, the secondary node may notify the master node of the generated RRC message, and then the master node sends the RRC message to the terminal device. Accordingly, the terminal device sends the RRC message to the master node, and then the master node forwards the RRC message to the secondary node. For the terminal device, the terminal device has only one RRC state.

In addition, the access network devices in the DC have different radio link control (radio link control, RLC)/media access control (media access control, MAC) entities. Based on different nodes in which data is located in the RLC/MAC entities of the access network devices, data radio bearers (data radio bearers, DRBs) are classified into the following several bearer types: a master cell group bearer (master cell group bearer, MCG Bearer), a secondary cell group bearer (secondary cell group bearer, SCG bearer), and a split bearer (split bearer) (also referred to as a split bearer or a split bearer).

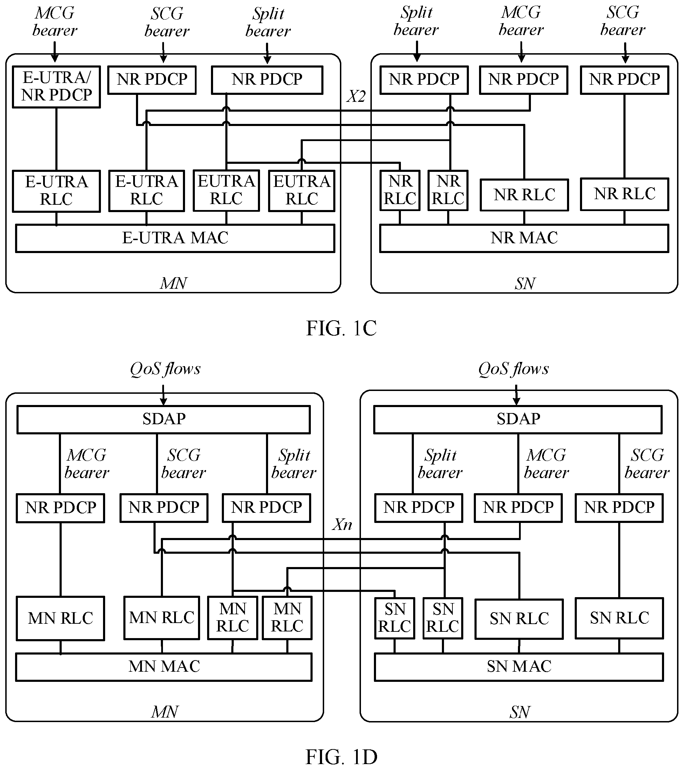

As shown in FIG. 1C and FIG. 1D, the master cell group bearer MCG bearer means that an RLC/MAC entity of the DRB is located in only the master node. For example, after the MN receives, from the core network, service data corresponding to the MCG bearer, the MN transmits, to an RLC entity and a MAC entity of the MN for processing, data obtained through processing of a packet data convergence protocol (packet data convergence protocol, PDCP) entity of the MN. For another example, after the SN receives, from the core network, service data corresponding to the MCG bearer, the SN transmits, to the MN through an interface (for example, an Xn interface, an X2 interface, or an F1 interface) between the MN and the SN, data obtained through processing of a PDCP entity of the SN, and then an RLC entity and a MAC entity of the MN further process the data. The secondary cell group bearer SCG bearer means that an RLC/MAC entity of the DRB is located in only the secondary node. For example, after the MN receives, from the core network, service data corresponding to the SCG bearer, the MN transmits, to the SN through the interface (for example, the Xn interface, the X2 interface, or the F1 interface) between the MN and the SN, data obtained through processing of a PDCP entity of the MN, and then an RLC entity and a MAC entity of the SN further process the data. For another example, after the SN receives, from the core network, service data corresponding to the SCG bearer, the SN transmits, to an RLC entity and a MAC entity of the SN for processing, data obtained through processing of a PDCP entity of the SN. The split bearer (split bearer) means that an RLC/MAC entity of the DRB exists in both the master node and the secondary node. For example, after the MN receives, from the core network, service data corresponding to the split bearer, the MN transmits, to an RLC entity and a MAC entity of the SN through the interface (for example, the Xn interface, the X2 interface, or the F1 interface) between the MN and the SN, a part of data obtained through processing of a PDCP entity of the MN, and transmits the other part of data or same data to an RLC entity and a MAC entity of the MN, so that both the RLC/MAC entity of the MN and the RLC/MAC entity of the SN can process the data. For another example, after the SN receives, from the core network, service data corresponding to the split bearer, the SN transmits, to an RLC entity and a MAC entity of the MN through the interface (for example, the Xn interface, the X2 interface, or the F1 interface) between the MN and the SN, a part of data obtained through processing of a PDCP entity of the SN, and transmits the other part of data or same data to an RLC entity and a MAC entity of the SN, so that both the RLC/MAC entity of the MN and the RLC/MAC entity of the SN can process the data.

As shown in FIG. 1C and FIG. 1D, the access network devices in the DC have different PDCP entities. Based on different nodes in which data is located in the PDCP entities of the access network devices, data radio bearers (data radio bearers, DRBs) are classified into the following several bearer types: an MN terminated bearer and an SN terminated bearer.

A bearer whose PDCP entity is terminated on the MN is referred to as the MN terminated (terminated) bearer. In this case, downlink (downlink, DL) data directly arrives at the MN from the core network, is processed by a PDCP/service data adaptation protocol (service data adaptation protocol, SDAP) entity of the MN, and then is sent to the terminal device via an RLC/MAC entity, and uplink (uplink, UL) data is processed by the PDCP/SDAP entity of the MN, and then is sent to the core network. Similarly, a bearer whose PDCP is terminated on the SN is referred to as the SN terminated bearer. In this case, the DL data directly arrives at the SN from the core network, is processed by a PDCP/SDAP entity of the SN, and then is sent to the terminal device via an RLC/MAC entity; and UL data is processed by the PDCP/SDAP entity of the SN, and then is sent to the core network.

It should be noted that bearer types may alternatively be distinguished based on a combination of a node in which the RLC/MAC is located and a node in which the PDCP entity is located. For example, the radio bearer types may be classified into an MN terminated master cell group bearer (MN terminated MCG bearer), an MN terminated secondary cell group bearer (MN terminated SCG bearer), an MN terminated split bearer (MN terminated split bearer), an SN terminated master cell bearer (SN terminated MCG bearer), an SN terminated secondary cell bearer (SN terminated SCG bearer), and an SN terminated split bearer (SN terminated split bearer).

It should be noted that, based on different standards used for the access network devices, the dual connectivity has a plurality of implementation forms. The communication method in this application is applicable to any dual connectivity in a conventional technology. For example, the dual connectivity in this application may be any MR-DC in evolved universal terrestrial radio access-new radio dual connectivity (E-UTRA-NR dual connectivity, EN-DC), next generation radio access node-evolved universal terrestrial radio access-new radio dual connectivity (NG-RAN E-UTRA-NR dual connectivity, NGEN-DC), new radio-evolved universal terrestrial radio access dual connectivity (NR-E-UTRA dual connectivity, NE-DC), or new radio-new radio dual connectivity (NR-NR dual connectivity, NR-DC). In the EN-DC, a master node is an LTE node (for example, an eNB) connected to the evolved packet core EPC, and a secondary node is an NR node (for example, a gNB). In the NGEN-DC, a master node is an LTE node (for example, an ng-eNB) connected to the 5G core 5GC, and a secondary node is an NR node (for example, a gNB). In the NE-DC, a master node is an NR node (for example, a gNB) connected to the 5G core 5GC, and a secondary node is an LTE node (for example, an eNB). In the NR-DC, a master node is an NR node (for example, a gNB) connected to the 5G core 5GC, and a secondary node is an NR node (for example, a gNB). A specific implementation of the dual connectivity is not limited in this application.

As shown in FIG. 1A, in an application layer measurement process in a dual-connectivity scenario, one of the access network device 021 and the access network device 022 collects, from the terminal device, an application layer measurement result that is based on a service. Then, the access network device that receives the application layer measurement result can forward the application layer measurement result to the measurement collection entity MCE. In a radio side measurement process in the dual-connectivity scenario, only one of the access network device 021 and the access network device 022 may obtain the radio side measurement configuration. In this case, only one access network device sends a radio side measurement result to the trace collection entity TCE. Alternatively, both the access network device 021 and the access network device 022 may obtain a radio side measurement result. In this case, both the access network device 021 and the access network device 022 send the radio side measurement result to the trace collection entity TCE. However, the measurement collection entity MCE and/or the trace collection entity TCE do/does not know a radio side measurement result of an access network device with which the application layer measurement result is to be associated.

In view of this, this application provides a communication method and a communication apparatus, to associate an application layer measurement result with a radio side measurement result in a dual-connectivity scenario.

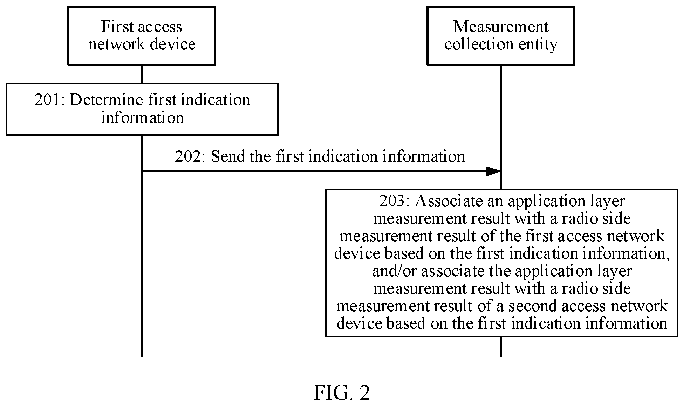

With reference to FIG. 2, the following describes a main procedure of the communication method provided in this application. In the method, a terminal device is connected to a first access network device and a second access network device. It may alternatively be understood as that the terminal device can communicate with both the first access network device and the second access network device. That is, the terminal device performs dual connectivity to the first access network device and the second access network device. It should be noted that the first access network device in this embodiment may be a master access network device (namely, a master node), or may be a secondary access network device (namely, a secondary node). For example, the first access network device is a master node, and the second access network device is a secondary node. For another example, the first access network device is a secondary node, and the second access network device is a master node. In this embodiment, which access network device in the first access network device and the second access network device is a master node is not limited. Specifically, network elements in a system mainly perform the following steps.

Step 201: The first access network device determines first indication information.

The first indication information indicates to associate an application layer measurement result from the terminal device with a radio side measurement result of the first access network device, and/or the first indication information indicates to associate the application layer measurement result with a radio side measurement result of the second access network device. It may alternatively be understood that the first indication information indicates radio side measurement results of access network devices with which the application layer measurement result is to be associated. In an example, the first indication information indicates to associate the application layer measurement result with the radio side measurement result of the first access network device. In another example, the first indication information indicates to associate the application layer measurement result with the radio side measurement result of the second access network device. In another example, the first indication information indicates to separately associate the application layer measurement result with the radio side measurement result of the first access network device and the radio side measurement result of the second access network device. That is, the application layer measurement result is associated with both the radio side measurement result of the first access network device and the radio side measurement result of the second access network device.

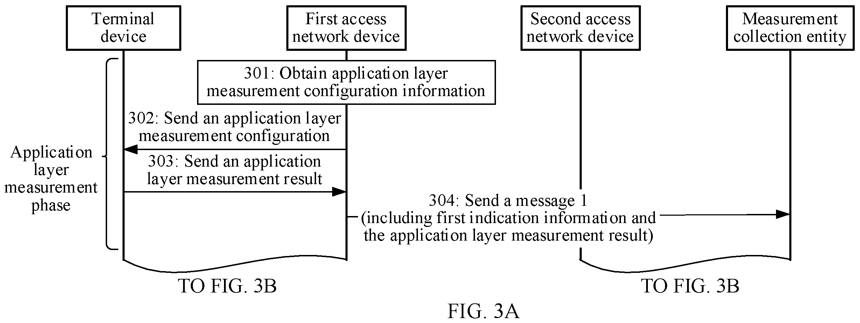

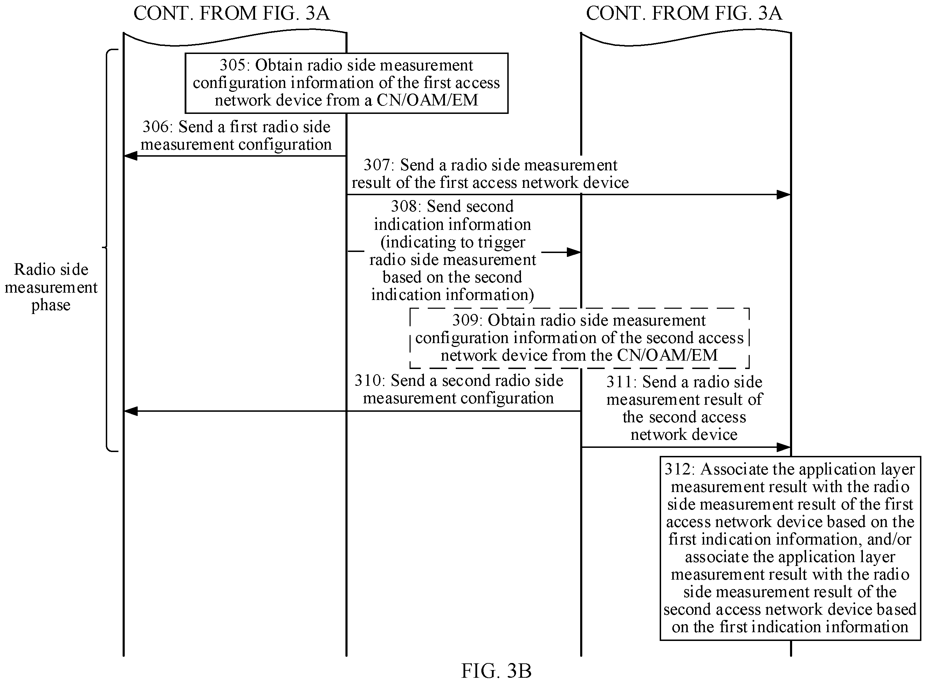

The application layer measurement result is a measurement result obtained by the terminal device by measuring at least one application layer measurement metric (Metric). For specific descriptions of the application layer measurement metric, refer to step 301 hereinafter. In the dual-connectivity scenario, the first access network device or the second access network device receives application layer measurement configuration information for a service or a type of service from a network element such as a core network (core network, CN), an operation, administration, and maintenance (operation, administration, and maintenance, OAM), or an element manager (element manager, EM). Then, one of the first access network device and the second access network device (which may be the first access network device or the second access network device) that receives the application layer measurement configuration information sends an application layer measurement configuration to the terminal device. Then, the access network device receives, from the terminal device, the application layer measurement result determined based on the application layer measurement configuration. Generally, in the dual-connectivity scenario, only one access network device receives the application layer measurement result from the terminal device. The access network device may be a master access network device (namely, a master node), or may be a secondary access network device (namely, a secondary node). This is not specifically limited herein. Optionally, in the dual-connectivity scenario, both the master access network device (namely, the master node) and the secondary access network device (namely, the secondary node) may receive the application layer measurement result from the terminal device. In this case, this application describes a scenario in which one of the access network devices receives the application layer measurement result from the terminal device. For specific descriptions of an application layer measurement procedure, refer to step 301 to step 304 in an embodiment corresponding to FIG. 3A and FIG. 3B.

In addition, the radio side measurement result is a measurement result obtained by the terminal device and/or the access network device by performing radio side measurement. Optionally, the radio side measurement may be minimization of drive tests (minimization of drive tests, MDT). In the dual-connectivity scenario, the first access network device and/or the second access network device may receive radio side measurement configuration information from the network element such as the CN, the OAM, or the EM. In other words, it is possible that only one of the first access network device and the second access network device can receive the radio side measurement configuration information, and the other access network device does not receive the radio side measurement configuration information, and does not need to perform radio side measurement. Alternatively, it is possible that the two access network devices can both obtain the radio side measurement configuration information to separately perform radio side measurement. Then, the access network device (the first access network device and/or the second access network device) that obtains the radio side measurement configuration information may send, to the terminal device, a radio side measurement configuration corresponding to the access network device, and further receive, from the terminal device, a radio side measurement result determined by the terminal device based on the radio side measurement configuration. Alternatively, the access network device performs radio side measurement based on the radio side measurement configuration information, to obtain a radio side measurement result. In this embodiment, a radio side measurement result that is determined based on a radio side measurement configuration of the first access network device and that is received by the first access network device from the terminal device or a radio side measurement result obtained by the first access network device through measurement is referred to as the radio side measurement result of the first access network device. Similarly, a radio side measurement result that is determined based on a radio side measurement configuration of the second access network device and that is received by the second access network device from the terminal device or a radio side measurement result obtained by the second access network device through measurement is referred to as the radio side measurement result of the second access network device. Optionally, that the access network device performs radio side measurement based on the radio side measurement configuration information means that the access network device performs, based on the radio side measurement configuration information, radio side measurement related to the terminal device, for example, measures a throughput, a packet loss rate, and a delay of a DRB corresponding to the terminal device. For specific descriptions of a radio side measurement procedure, refer to step 305 to step 311 in the embodiment corresponding to FIG. 3A and FIG. 3B.

It should be noted that, due to mobility of the terminal device, the first access network device and the second access network device that are accessed by the terminal device will change. That is, the master access network device and/or the secondary access network device that correspond/corresponds to the terminal device will change. Therefore, in other words, the first indication information indicates to associate the application layer measurement result from the terminal device with a radio side measurement result of the master access network device, and/or the first indication information indicates to associate the application layer measurement result with a radio side measurement result of the secondary access network device. In all embodiments of this application, the association between the application layer measurement result and the radio side measurement result of the first access network device may be referred to as association between the application layer measurement result and a radio side measurement result of a role node (namely, a master access network device or a secondary access network device) corresponding to the first access network device, and the association between the application layer measurement result and the radio side measurement result of the second access network device may be referred to as association between the application layer measurement result and a radio side measurement result of a role node (namely, a master access network device or a secondary access network device) corresponding to the second access network device. For example, when the first access network device is the master access network device of the terminal device, and the second access network device is the secondary access network device of the terminal device, the association between the application layer measurement result and the radio side measurement result of the first access network device may be referred to as the association between the application layer measurement result and the radio side measurement result of the master access network device, and the association between the application layer measurement result and the radio side measurement result of the second access network device may be referred to as the association between the application layer measurement result and the radio side measurement result of the secondary access network device. For example, when the first access network device is the secondary access network device of the terminal device, and the second access network device is the master access network device of the terminal device, the association between the application layer measurement result and the radio side measurement result of the first access network device may be referred to as the association between the application layer measurement result and the radio side measurement result of the secondary access network device, and the association between the application layer measurement result and the radio side measurement result of the second access network device may be referred to as the association between the application layer measurement result and the radio side measurement result of the master access network device.

Specifically, any one of the following implementations may be used for the first indication information.

In a possible implementation 1, the first indication information includes a radio bearer type. For explanations of each of the foregoing bearer types, refer to the foregoing descriptions corresponding to FIG. 1C or FIG. 1D. Details are not described herein again.

In an example of this implementation, the radio bearer type is any one of a master cell group bearer (MCG Bearer), a secondary cell group bearer (SCG bearer), and a split bearer (split bearer).

For example, if the radio bearer type included in the first indication information is the master cell group bearer, the first indication information indicates to associate the application layer measurement result with the radio side measurement result of the master access network device (namely, the master node) in the first access network device and the second access network device; if the radio bearer type included in the first indication information is the secondary cell group bearer, the first indication information indicates to associate the application layer measurement result with the radio side measurement result of the secondary access network device (namely, the secondary node) in the first access network device and the second access network device; or if the radio bearer type included in the first indication information is the split bearer, the first indication information indicates to separately associate the application layer measurement result with the radio side measurement result of the first access network device and the radio side measurement result of the second access network device.

In another example of this implementation, the radio bearer type is any one of an MN terminated master cell group bearer (MN terminated MCG bearer), an MN terminated secondary cell group bearer (MN terminated SCG bearer), an MN terminated split bearer (MN terminated split bearer), an SN terminated master cell bearer (SN terminated MCG bearer), an SN terminated secondary cell bearer (SN terminated SCG bearer), and an SN terminated split bearer (SN terminated split bearer).

For example, if the radio bearer type included in the first indication information is the MN terminated master cell group bearer, the first indication information indicates to associate the application layer measurement result with the radio side measurement result of the master access network device (namely, the master node) in the first access network device and the second access network device; if the radio bearer type included in the first indication information is the SN terminated secondary cell group bearer, the first indication information indicates to associate the application layer measurement result with the radio side measurement result of the secondary access network device (namely, the secondary node) in the first access network device and the second access network device; or if the radio bearer type included in the first indication information is the MN terminated split bearer, the SN terminated split bearer, the MN terminated secondary cell group bearer, and the SN terminated master cell group bearer, the first indication information indicates to separately associate the application layer measurement result with the radio side measurement result of the first access network device and the radio side measurement result of the second access network device.

In a possible implementation 2, the first indication information includes an identifier of the first access network device and/or an identifier of the second access network device.

For example, if the first indication information includes the identifier of the first access network device, the first indication information indicates to associate the application layer measurement result with the radio side measurement result of the first access network device; if the first indication information includes the identifier of the second access network device, the first indication information indicates to associate the application layer measurement result with the radio side measurement result of the second access network device; or if the first indication information includes the identifier of the first access network device and the identifier of the second access network device, the first indication information indicates to separately associate the application layer measurement result with the radio side measurement result of the first access network device and the radio side measurement result of the second access network device.

In a possible implementation 3, the first indication information includes information indicating one access network device or information indicating two access network devices.

For example, if the first indication information includes the information indicating one access network device, the first indication information indicates to associate the application layer measurement result with the radio side measurement result of the first access network device or the second access network device; or if the first indication information includes the information indicating two access network devices, the first indication information indicates to associate the application layer measurement result with the radio side measurement results of the first access network device and the second access network device.

In a possible implementation 4, the first indication information includes a radio side measurement identifier indicating radio side measurement of at least one access network device.

For example, if the first indication information includes a radio side measurement identifier indicating radio side measurement of one access network device, the first indication information indicates to associate the application layer measurement result with the radio side measurement result of the first access network device and/or the radio side measurement result of the second access network device. Optionally, in this case, if radio side measurement identifiers of radio side measurement of the two access network devices are different, the first indication information indicates to associate the application layer measurement result with the radio side measurement result of the first access network device or the second access network device. If radio side measurement identifiers of radio side measurement of the two access network devices are the same, the first indication information indicates to associate the application layer measurement result with the radio side measurement results of the first access network device and the second access network device. If the first indication information includes radio side measurement identifiers indicating radio side measurement of two access network devices, the first indication information indicates to associate the application layer measurement result with the radio side measurement results of the first access network device and the second access network device.

It should be understood that, in actual application, any one of the foregoing implementations or another implementation may be used for the first indication information. This is not specifically limited in this application.

In addition, in this embodiment, the first access network device may determine the first indication information in any one of the following implementations.

In a possible implementation, the first indication information is determined by the first access network device based on identification information of a service corresponding to the application layer measurement result. The identification information of the service identifies a type of service or a service for which the terminal device performs application layer measurement. For example, the identification information of the service includes an identifier of a protocol data unit (protocol data unit, PDU) session (PDU session ID) and/or an identifier of at least one quality of service (quality of service, QoS) flow (QoS flow ID) in the PDU session.

For example, before the first access network device sends the first indication information to a measurement collection entity, the first access network device can obtain, from the terminal device, the identification information of the service corresponding to the application layer measurement result. Then, the first access network device determines the first indication information based on the identification information of the service. For example, when the terminal device has started the application layer measurement, the terminal device sends indication information to the first access network device, to indicate that the application layer measurement has been started, and the terminal device sends the identification information of the service corresponding to the application layer measurement result. Optionally, in this application, the service corresponding to the application layer measurement result may also be referred to as a service corresponding to the application layer measurement.

For example, the first access network device can determine, based on the identification information of the service, an access network device to which the service relates, that is, determine whether the service relates to only the first access network device, relates to only the second access network device, or needs to relate to the first access network device and the second access network device. Further, the first access network device can determine that the first indication information specifically indicates the radio side measurement results of the access network devices with which the application layer measurement result is to be associated. If the first access network device determines that the service relates to only the first access network device, the first indication information determined by the first access network device indicates to associate the application layer measurement result with only the radio side measurement result of the first access network device; if the first access network device determines that the service relates to only the second access network device, the first indication information determined by the first access network device indicates to associate the application layer measurement result with only the radio side measurement result of the second access network device; or if the first access network device determines that the service relates to the first access network device and the second access network device, the first indication information determined by the first access network device indicates to separately associate the application layer measurement result with the radio side measurement result of the first access network device and the radio side measurement result of the second access network device. Optionally, the access network device to which the service relates may be an access network device corresponding to an RLC/MAC entity of a radio bearer corresponding to the service or an access network device corresponding to a PDCP entity and the RLC/MAC entity of the radio bearer corresponding to the service.

In another possible implementation, the first indication information is determined by the first access network device based on a radio bearer type of a service corresponding to the application layer measurement result. The radio bearer type can reflect an access network device to which the service relates, that is, be for determining whether the service relates to only the first access network device, relates to only the second access network device, or needs to relate to the first access network device and the second access network device.

For example, before the first access network device sends the first indication information to a measurement collection entity, the first access network device is to obtain the radio bearer type of the service corresponding to the application layer measurement result. Then, the first access network device determines the first indication information based on the radio bearer type.

For example, if the first access network device determines that the radio bearer type of the service is the master cell group bearer, the first access network device determines that the service relates to only the first access network device, so that the first indication information determined by the first access network device indicates to associate the application layer measurement result with only the radio side measurement result of the first access network device; if the first access network device determines that the radio bearer type of the service is the secondary cell group bearer, the first access network device determines that the service relates to only the second access network device, so that the first indication information determined by the first access network device indicates to associate the application layer measurement result with only the radio side measurement result of the second access network device; or if the first access network device determines that the radio bearer type of the service is the split bearer, the first access network device determines that the service relates to the first access network device and the second access network device, so that the first indication information determined by the first access network device indicates to separately associate the application layer measurement result with the radio side measurement result of the first access network device and the radio side measurement result of the second access network device.

It should be noted that the first access network device may obtain the radio bearer type in a plurality of manners. For example, the first access network device determines, based on identification information of the service corresponding to the application layer measurement result, the radio bearer type of the service corresponding to the application layer measurement result. For another example, the first access network device may obtain, from the terminal device, identification information of a service corresponding to application layer measurement, or may obtain, from a core network device, the identification information of the service corresponding to the application layer measurement. In the actual application, the first access network device may alternatively obtain the radio bearer type in other manners, which are not listed one by one herein.

Step 202: The first access network device sends the first indication information to the measurement collection entity. Accordingly, the measurement collection entity receives the first indication information from the first access network device.

In a possible implementation, the first access network device may place the first indication information in an independent message, and send the message to the measurement collection entity. That is, the message that carries the first indication information does not carry other content.

In another possible implementation, the first access network device may include the first indication information in a message in the application layer measurement procedure, and report the message to the measurement collection entity. Specifically, the first access network device may send, to the measurement collection entity via a message (which is referred to as a first message hereinafter), the first indication information together with information that can indicate the application layer measurement result. In this way, after receiving the foregoing message, the measurement collection entity can determine the application layer measurement result that is to be associated with the radio side measurement result indicated by the first indication information. The information that can indicate the application layer measurement result may be directly the application layer measurement result, or may be information identifying the application layer measurement corresponding to the application layer measurement result. In other words, in addition to including the first indication information, the first message further includes the application layer measurement result and/or the information identifying the application layer measurement corresponding to the application layer measurement result.

In an example of this implementation, the first message includes the first indication information and the application layer measurement result. That is, the first access network device encapsulates the first indication information in the message that carries the application layer measurement result, and sends the message to the measurement collection entity.

In another example of this implementation, the first message includes the first indication information and application layer measurement starting indication information. That is, the first access network device encapsulates the first indication information in a message that carries the application layer measurement starting indication information, and sends the message to the measurement collection entity. The application layer measurement starting indication information indicates that the corresponding application layer measurement has been started. Optionally, the message that carries the application layer measurement starting indication information includes an application layer measurement identifier. Optionally, the message that carries the application layer measurement starting indication information includes the identification information of the service corresponding to the application layer measurement. The identification information of the service identifies the type of service or the service for which the terminal device performs application layer measurement. For example, the identification information of the service includes the PDU session ID and/or the QoS flow ID.

In another example of this implementation, the first message includes the first indication information and the information identifying the application layer measurement corresponding to the application layer measurement result. That is, the first access network device encapsulates, in the first message, the first indication information and the information identifying the application layer measurement corresponding to the application layer measurement result, to send the first message to the measurement collection entity.

For example, the information identifying the application layer measurement corresponding to the application layer measurement result may be a quality of experience reference (QoE reference). The first access network device encapsulates the first indication information and the QoE reference in the first message, and sends the first message to the measurement collection entity via the first message. The QoE reference is information that is sent by the CN, the OAM, or the EM to the first access network device and that identifies the application layer measurement. For example, the QoE reference may be configured by the core network device, or may be configured by a network management device. This is not specifically limited herein.

In another example of this implementation, the first message includes the first indication information, the application layer measurement result, and the information identifying the application layer measurement corresponding to the application layer measurement result. Optionally, the first message includes the first indication information and an application layer measurement report. The application layer measurement report includes content such as the application layer measurement result, the information identifying the application layer measurement corresponding to the application layer measurement result (for example, an application layer measurement identifier), and the identification information of the service corresponding to the application layer measurement (for example, a PDU session ID and/or a QoS flow ID).

It should be understood that, in the actual application, the first access network device may send the first indication information to the measurement collection entity by using the first message described in any one of the foregoing implementations.

Optionally, the first message described in the foregoing examples further includes the radio side measurement identifier, so that the measurement collection entity can learn of radio side measurement whose side measurement result should be associated with the application layer measurement.

Step 203: The measurement collection entity associates the application layer measurement result with the radio side measurement result of the first access network device based on the first indication information, and/or associates the application layer measurement result with the radio side measurement result of the second access network device based on the first indication information.

A manner of processing the application layer measurement result and the radio side measurement result by the measurement collection entity varies with content indicated by the first indication information. The following separately provides descriptions.

In a possible implementation A-1, the first indication information includes the radio bearer type of the service corresponding to the application layer measurement result. The radio bearer type may be the master cell group bearer, the secondary cell group bearer, or the split bearer.

For example, when the first indication information includes the master cell group bearer, the measurement collection entity associates the application layer measurement result with the radio side measurement result of the master access network device in the first access network device and the second access network device.

For example, when the first indication information includes the secondary cell group bearer, the measurement collection entity associates the application layer measurement result with the radio side measurement result of the secondary access network device in the first access network device and the second access network device.

For example, when the first indication information includes the split bearer, the measurement collection entity separately associates the application layer measurement result with the radio side measurement result of the first access network device and the radio side measurement result of the second access network device.

In a possible implementation A-2, the first indication information includes the radio bearer type of the service corresponding to the application layer measurement result. The radio bearer type may be the MN terminated master cell group bearer, the MN terminated secondary cell group bearer, the MN terminated split bearer, the SN terminated master cell group bearer, the SN terminated secondary cell group bearer, or the SN terminated split bearer.

For example, when the first indication information includes the MN terminated master cell group bearer, the measurement collection entity associates the application layer measurement result with the radio side measurement result of the master access network device in the first access network device and the second access network device.

For example, when the first indication information includes the SN terminated secondary cell group bearer, the measurement collection entity associates the application layer measurement result with the radio side measurement result of the secondary access network device in the first access network device and the second access network device.

For example, when the first indication information includes at least one of the MN terminated split bearer, the SN terminated split bearer, the MN terminated secondary cell group bearer, and the SN terminated master cell group bearer, the measurement collection entity separately associates the application layer measurement result with the radio side measurement result of the first access network device and the radio side measurement result of the second access network device.

In a possible implementation B, the first indication information includes the identifier of the first access network device and/or the identifier of the second access network device.

For example, when the first indication information includes the identifier of the first access network device, the measurement collection entity associates the application layer measurement result with the radio side measurement result of the first access network device.

For example, when the first indication information includes the identifier of the second access network device, the measurement collection entity associates the application layer measurement result with the radio side measurement result of the second access network device.

For example, when the first indication information includes the identifier of the first access network device and the identifier of the second access network device, the measurement collection entity separately associates the application layer measurement result with the radio side measurement result of the first access network device and the radio side measurement result of the second access network device.

In a possible implementation C, the first indication information includes the information indicating one access network device or the information indicating two access network devices.

For example, when the first indication information includes the information indicating one access network device, the measurement collection entity associates the application layer measurement result with the radio side measurement result of the first access network device or the second access network device. It should be noted that, when the first indication information includes the information indicating one access network device, only one of the first access network device and the second access network device sends the radio side measurement configuration to the measurement collection entity. In this case, the measurement collection entity associates the received radio side measurement result of the access network device with the application layer measurement result.

For example, when the first indication information includes the information indicating two access network devices, the measurement collection entity associates the application layer measurement result with the radio side measurement results of the first access network device and the second access network device.

In a possible implementation D, the first indication information includes the radio side measurement identifier indicating the radio side measurement of the at least one access network device.

For example, when the first indication information includes the radio side measurement identifier indicating the radio side measurement of one access network device, the measurement collection entity associates the application layer measurement result with the radio side measurement result of the first access network device and/or the radio side measurement result of the second access network device. Optionally, in this case, if the radio side measurement identifiers of the radio side measurement of the two access network devices are different, the measurement collection entity associates the application layer measurement result with the radio side measurement result of the first access network device or the second access network device. If the radio side measurement identifiers of the radio side measurement of the two access network devices are the same, the measurement collection entity associates the application layer measurement result with the radio side measurement results of the first access network device and the second access network device.

For example, when the first indication information includes the radio side measurement identifiers indicating the radio side measurement of the two access network devices, the measurement collection entity associates the application layer measurement result with the radio side measurement results of the first access network device and the second access network device.

It should be understood that, in actual application, based on different content included in the first indication information, the first access network device may determine, in any one of the foregoing implementations, a radio side measurement result on which association processing is to be performed with the application layer measurement result.

It should be further understood that, in this embodiment, that the application layer measurement result is associated with the radio side measurement result may be specifically that the measurement collection entity stores the application layer measurement result and the radio side measurement result in correspondence. That is, the measurement collection entity stores an association relationship between the application layer measurement and the radio side measurement. For example, the measurement collection entity stores, in correspondence, the information indicating the application layer measurement result (for example, the QoE reference) and information indicating the radio side measurement (for example, the radio side measurement identifier), to establish an association relationship between the application layer measurement result and the radio side measurement result. Alternatively, that the application layer measurement result is associated with the radio side measurement result may be that the measurement collection entity obtains a radio side measurement result in a time period corresponding to the application layer measurement result. For example, when the application layer measurement result carries first time information, and the first access network device and/or the second access network device send/sends the radio side measurement results/the radio side measurement result to the measurement collection entity, second time information is further sent, and the measurement collection entity can learn, based on the first time information and the second time information, that the radio side measurement result is the radio side measurement result in the time period corresponding to the application layer measurement result, or learn that a time period corresponding to the radio side measurement result overlaps the time period corresponding to the application layer measurement result. That the application layer measurement result is associated with the radio side measurement result may alternatively be that the measurement collection entity analyzes whether degeneration or deterioration of the application layer measurement result is caused by degeneration or deterioration of the radio side measurement result.

In this embodiment, in a scenario in which the terminal device is connected to the first access network device and the second access network device (that is, in the dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate a radio side measurement result of an access network device with which the application layer measurement result is to be associated. Therefore, the measurement collection entity can accurately learn of, based on the first indication information, the radio side measurement result of the access network device with which the application layer measurement result is to be associated. Further, the measurement collection entity can analyze, based on the association between the application layer measurement result and the radio side measurement result, whether the degeneration or the deterioration of the application layer measurement result is caused by the degeneration or the deterioration of the radio side measurement result. Further, a network side can better optimize a network to improve user experience.

It should be noted that the measurement collection entity MCE in this embodiment may be replaced with a trace collection entity TCE. For example, step 202 may be replaced with: The first access network device sends the first indication information to the trace collection entity TCE. Accordingly, the trace collection entity TCE receives the first indication information from the first access network device. In this case, step 203 may be replaced with: The trace collection entity TCE associates the application layer measurement result with the radio side measurement result of the first access network device based on the first indication information, and/or associates the application layer measurement result with the radio side measurement result of the second access network device based on the first indication information.

It should be further noted that the foregoing communication method may relate to both the measurement collection entity MCE and the trace collection entity TCE. In some embodiments, if an access network device sends a radio side measurement result to the trace collection entity TCE, and sends the application layer measurement result to the measurement collection entity MCE, the measurement collection entity MCE and/or the trace collection entity TCE may associate the application layer measurement result with the radio side measurement result. For example, the measurement collection entity MCE and the trace collection entity TCE may exchange the application layer measurement result and the radio side measurement result through signaling exchange.

For example, the measurement collection entity MCE receives the application layer measurement result from the first access network device. The trace collection entity TCE receives the radio side measurement result of the first access network device from the first access network device and/or receives the radio side measurement result of the second access network device from the second access network device. Then, the measurement collection entity MCE may obtain the radio side measurement result of the first access network device and/or the radio side measurement result of the second access network device from the trace collection entity TCE. Further, the measurement collection entity MCE determines, based on the first indication information, to associate the application layer measurement result with the radio side measurement result of the first access network device and/or associate the application layer measurement result with the radio side measurement result of the second access network device.

For example, the measurement collection entity MCE receives the application layer measurement result from the first access network device. The trace collection entity TCE receives the radio side measurement result of the first access network device from the first access network device and/or receives the radio side measurement result of the second access network device from the second access network device. Then, the trace collection entity TCE may obtain the first indication information and the application layer measurement result from the measurement collection entity MCE. Further, the trace collection entity TCE determines, based on the first indication information, to associate the application layer measurement result with the radio side measurement result of the first access network device and/or associate the application layer measurement result with the radio side measurement result of the second access network device.

It should be further noted that the MCE and the TCE may alternatively be a same entity.

In addition, in a possible implementation, the application layer measurement result includes an access network device-visible application layer measurement result and/or an access network device-invisible application layer measurement result. The access network device-visible application layer measurement result may be replaced with an access network device-visible application layer measurement report, and the access network device-invisible application layer measurement result may be replaced with an access network device-invisible application layer measurement report.

The access network device-invisible application layer measurement report is usually located in a container (container) (in other words, the application layer measurement report is carried or encapsulated in a message in a form of the container). Therefore, the access network device-invisible application layer measurement report is usually referred to as a QoE measurement report container (QoE measurement report container). Generally, an application layer measurement report of one service type is encapsulated in one container. After obtaining the container in which the application layer measurement report is encapsulated, an access network device does not parse content in the container. Therefore, the application layer measurement report that is encapsulated in the container and that is not actively parsed and identified by the access network device is referred to as the access network device-invisible application layer measurement report. In addition, an application layer measurement configuration corresponding to the access network device-invisible application layer measurement report is also an access network device-invisible application layer measurement configuration, and the access network device-invisible application layer measurement configuration is also transmitted to the terminal device by being encapsulated in the container. Therefore, the access network device-invisible application layer measurement configuration is usually referred to as a QoE measurement configuration container (QoE measurement configuration container).

In addition, the access network device-visible application layer measurement report (RAN-visible QoE report) (in other words, the application layer measurement report is not carried or encapsulated in a message in a form of a container, but in another form, for example, in a form of an information element (information element, IE)). The access network device-visible application layer measurement report is a measurement result that is about an application layer measurement configuration and that can be identified and used by the access network device. The access network device-visible application layer measurement report (RAN-visible QoE report) corresponds to an access network device-visible QoE configuration (RAN-visible QoE configuration).

It should be noted that the application layer measurement result in the foregoing implementations may alternatively be replaced with the QoE measurement report container (QoE measurement report container), the access network device-visible application layer measurement report (RAN-visible QoE report), or a combination of the QoE measurement report container (QoE measurement report container) and the access network device-visible application layer measurement report (RAN-visible QoE report). In other words, if the terminal device needs to send both the QoE measurement report container (QoE measurement report container) and the access network device-visible application layer measurement report (RAN-visible QoE report) to the first access network device, the terminal device sends the QoE measurement report container (QoE measurement report container) and the access network device-visible application layer measurement report (RAN-visible QoE report) to the first access network device via a message. In this case, a QoE measurement report container (QoE measurement report container) and an access network device-visible application layer measurement report (RAN-visible QoE report) that correspond to a same service and that is obtained by the terminal device at a same moment may be understood as an application layer measurement report. In other words, an application layer measurement report obtained by the terminal device by measuring a service of a specific service type may include an access network device-invisible application layer measurement report encapsulated in a container and an access network device-visible application layer measurement report located outside the container.

In addition, "visible" mentioned in this application may also be referred to as "identifiable", "perceivable", "interpretable", "learned", "detectable", and the like. This is not specifically limited herein.

The following further describes the foregoing communication method with reference to FIG. 3A and FIG. 3B. In the method, a terminal device performs dual connectivity to a first access network device and a second access network device. The first access network device may be a master access network device (namely, a master node), or may be a secondary access network device (namely, a secondary node). For example, the first access network device is a master node, and the second access network device is a secondary node. For another example, the first access network device is a secondary node, and the second access network device is a master node. In this embodiment, which access network device in the first access network device and the second access network device is a master node is not limited. As shown in FIG. 3A and FIG. 3B, the terminal device, the first access network device, the second access network device, and a measurement collection entity are to perform the following specific steps.

Step 301: The first access network device obtains application layer measurement configuration information.

The application layer measurement configuration information is information that is determined by a network side and that is used by the first access network device to configure application layer measurement for the terminal device. For example, the first access network device may receive the application layer measurement configuration information from a network element such as a CN, an OAM, or an EM. For example, for signaling based QoE measurement, the CN sends the application layer measurement configuration information to the first access network device; and for management based QoE measurement, the OAM or the EM sends the application layer measurement configuration information to the first access network device. Generally, the CN sends the application layer measurement configuration information to only the master access network device. Optionally, the master access network device may send the application layer measurement configuration information to the secondary access network device. The OAM may send the application layer measurement configuration information to the master access network device and the secondary access network device. For example, if the first access network device is the master access network device, the first access network device receives the application layer measurement configuration information from the CN or the OAM. If the first access network device is the secondary access network device, and the second access network device is the master access network device, the first access network device receives the application layer measurement configuration information from the OAM, or receives the application layer measurement configuration information from the CN via the second access network device.

Optionally, the application layer measurement configuration information includes information such as an application layer measurement configuration, a service type (Service Type), a QoE reference (QoE reference), and an IP address of the measurement collection entity.

The application layer measurement configuration may be sent to the first access network device in a form of a container. For example, the application layer measurement configuration is a container for application layer measurement configuration (container for application layer measurement configuration).

The application layer measurement configuration includes at least one application layer measurement metric (Metric), namely, some metrics or metrics that the network side needs the terminal device to measure and report. For example, the application layer measurement metric includes at least one of the following: an average throughput, which is a total quantity of bits received by an application layer of the terminal device in a measurement interval, for example, an average throughput in a streaming media service, where for details, refer to a definition in clause 10.2 in the 3rd generation partnership project (3rd generation partnership project, 3GPP) protocol TS 26.247; an initial playout delay, which is an initial playout delay in starting to present streaming media, for example, may be specifically defined as from a moment of obtaining a 1^{st} segment of the media to a moment of extracting the streaming media from a client buffer, where for details, refer to a definition in clause 10.2 in the 3GPP protocol TS 26.247; and a buffer level, which refers to duration for which media data is to be continuously played from a current playout moment, where for details, refer to a definition in clause 10.2 in the 3GPP protocol TS 26.247. Details are not listed one by one herein. Optionally, the application layer measurement configuration further includes a range in which the network side needs the terminal device to perform application layer measurement, for example, a time range, a start time point, and duration of performing measurement, and a policy according to which the network side needs the terminal device to perform reporting, for example, a measurement periodicity, a reporting periodicity, a reporting interval, a sampling ratio, or a location filtering configuration.

The service type indicates a type of a service corresponding to the application layer measurement. The service may be a service of a type such as a streaming service (streaming service), a voice service, a multimedia telephony service for IP multimedia system (multimedia telephony service for IMS, MTSI), a virtual reality (virtual reality, VR) service, an augmented reality (augmented reality, AR) service, or a multicast broadcast service (multicast broadcast service, MBS).

The QoE reference is information that is generated by the CN, the OAM, or the EM and that identifies application layer measurement, or may be understood as identifying a QoE measurement collection task on the first access network device and another network side device (for example, the measurement collection entity MCE or a measurement tracking entity TCE). Therefore, the QoE reference is also referred to as a QoE measurement identifier. Optionally, the QoE reference is a globally unique identifier. For example, the QoE reference consists of a public land mobile network (public land mobile network, PLMN) and a QoE measurement collection identifier, where the PLMN consists of a mobile country code (mobile country code, MCC) and a mobile network code (mobile network code, MNC), and the QoE measurement collection identifier is allocated by a management system or an operator.

Optionally, the application layer measurement configuration information further includes indication information 1, and the indication information 1 indicates a radio side measurement configuration associated with the application layer measurement configuration. For example, the indication information 1 indicates a measurement identifier corresponding to the radio side measurement configuration. For example, if radio side measurement is MDT, the indication information 1 is MDT alignment information (CHOICE MDT Alignment Information), and the MDT alignment information includes a trace identifier (trace ID). Optionally, two radio side measurement configurations are associated with the application layer measurement configuration. One corresponds to a radio side measurement configuration of the master access network device, and the other corresponds to a radio side measurement configuration of the secondary access network device. For details, refer to related descriptions in step 305 and step 306 hereinafter. Details are not described herein again.

Optionally, the application layer measurement configuration information further includes an access network-visible application layer measurement configuration, for example, a RAN-visible QoE measurement quantity or measurement metric (Available RAN Visible QoE Metric).

It should be noted that, in actual application, the application layer measurement configuration received by the first access network device may be an access network device-visible application layer measurement configuration, for example, an access network device-visible QoE configuration (RAN-visible QoE configuration); may be an access network device-invisible application layer measurement configuration, for example, a QoE measurement configuration container (QoE measurement configuration container); or may include the access network device-visible application layer measurement configuration and the access network device-invisible application layer measurement configuration. This is not specifically limited herein.

Step 302: The first access network device sends an application layer measurement configuration to the terminal device. Accordingly, the terminal device receives the application layer measurement configuration from the first access network device.

The application layer measurement configuration is some information needed by the terminal device to perform application layer measurement for a service or a type of service, and is some content in the application layer measurement configuration information received by the first access network device from the CN, the OAM, or the EM.

The application layer measurement configuration includes at least one application layer measurement metric. For explanations of the application layer measurement configuration and the application layer measurement metric, refer to the related descriptions in step 301. Details are not described herein again.

It should be noted that the application layer measurement configuration sent by the first access network device to the terminal device may be the same as the application layer measurement configuration received by the first access network device from the network element such as the CN, the OAM, or the EM, or may include only some information in the application layer measurement configuration received from the network element such as the CN, the OAM, or the EM. For example, the application layer measurement configuration received by the first access network device from the network element such as the CN, the OAM, or the EM includes application layer measurement metrics such as the average throughput, the initial playout delay, the buffer level, a quantity of consecutively lost packets, and an average bit rate, but the application layer measurement configuration sent by the first access network device to the terminal device includes only three application layer measurement metrics: the average throughput, the initial playout delay, and the buffer level. In the actual application, there may be further other examples, which are not listed one by one herein.

Optionally, when sending the application layer measurement configuration to the terminal device, the first access network device may further send an application layer measurement identifier to the terminal device. The application layer measurement identifier is information that is generated by the first access network device for the terminal device and that identifies the application layer measurement of the terminal device, and corresponds to the application layer measurement configuration configured by the first access network device for the terminal device. Generally, the application layer measurement identifier corresponds to the QoE reference, and the first access network device stores a correspondence between the application layer measurement identifier and the QoE reference.

It should be noted that, in the actual application, the application layer measurement configuration sent by the first access network device to the terminal device may be the access network device-visible application layer measurement configuration, for example, the access network device-visible QoE configuration (RAN-visible QoE configuration); may be the access network device-invisible application layer measurement configuration, for example, the QoE measurement configuration container (QoE measurement configuration container); or may include the access network device-visible application layer measurement configuration and the access network device-invisible application layer measurement configuration. This is specifically related to the application layer measurement configuration received by the first access network device. This is not limited herein.

After the terminal device receives the application layer measurement configuration, the terminal device is to perform application layer measurement based on the application layer measurement configuration, to obtain an application layer measurement result.

Step 303: The terminal device sends the application layer measurement result to the first access network device. Accordingly, the first access network device receives the application layer measurement result from the terminal device.

The application layer measurement result is a measurement result obtained by the terminal device by measuring at least one application layer measurement metric. For example, if application layer measurement metrics include metrics such as the average throughput, the initial playout delay, and the buffer level, application layer measurement results include measurement results of the metrics such as the average throughput, the initial playout delay, and the buffer level.

Optionally, when the terminal device sends the application layer measurement result to the first access network device, the terminal device further sends the application layer measurement identifier to the first access network device, so that the first access network device determines the application layer measurement based on the application layer measurement identifier, where the received application layer measurement result is a measurement result of the application layer measurement configured by the first access network device for the terminal device.

Optionally, when the terminal device sends the application layer measurement result to the first access network device, the terminal device further sends, to the first access network device, identification information of the service corresponding to the current application layer measurement. The identification information of the service identifies the type of service or the service for which the terminal device performs application layer measurement. For example, the identification information of the service includes an identifier (PDU session ID) of a PDU session and/or an identifier (QoS flow ID) of at least one QoS flow in the PDU session.

Optionally, before or when the terminal device sends the application layer measurement result to the first access network device, the terminal device further sends application layer measurement starting indication information to the first access network device, where the application layer measurement starting indication information indicates that the terminal device has started application layer measurement. Optionally, the application layer measurement starting indication information includes an application layer measurement identifier, to indicate the application layer measurement started by the terminal device. Optionally, when the terminal device sends the application layer measurement starting indication information, the terminal device may further send identification information of a service corresponding to the current application layer measurement, for example, a PDU session ID and/or an ID of at least one QoS flow in the PDU session.

It should be noted that the application layer measurement result may be an access network-visible application layer measurement result, for example, a RAN-visible application layer measurement report (RAN-visible QoE report); may be an access network-invisible application layer measurement result, for example, a RAN-invisible application layer measurement report (QoE measurement report container); or may include both the access network-visible application layer measurement result and the access network-invisible application layer measurement result. In this embodiment, descriptions are provided by using an example in which the application layer measurement result is an access network-invisible application layer measurement result encapsulated in a container.

Step 304: The first access network device sends a message 1 to the measurement collection entity. Accordingly, the measurement collection entity receives the message 1 from the first access network device.

In this step, after the first access network device receives the application layer measurement result and the application layer measurement identifier from the terminal device, the first access network device can determine the application layer measurement based on the application layer measurement identifier, where the application layer measurement result is the measurement result of the application layer measurement configured by the first access network device for the terminal device. In addition, the application layer measurement configuration received by the first access network device includes the QoE reference and the IP address of the measurement collection entity, and the first access network device stores a correspondence between the application layer measurement identifier, the QoE reference, and the IP address of the measurement collection entity. Therefore, the first access network device further determines the IP address of the measurement collection entity based on the application layer measurement identifier, and further sends the message 1 to the measurement collection entity.

The message 1 is an implementation of the first message in the embodiment corresponding to FIG. 2. The message 1 includes first indication information. For explanations of the first indication information, refer to the related descriptions in step 201. Details are not described herein again.

In a possible example, the message 1 includes the first indication information and an application layer measurement result. That is, the first access network device encapsulates the first indication information in a message that carries the application layer measurement result, and sends the message to the measurement collection entity. Optionally, if the first access network device determines, based on the application layer measurement identifier, the QoE reference corresponding to the application layer measurement identifier, the message 1 further includes the QoE reference. In this example, step 304 is performed after step 303.

In another possible example, the message 1 includes the first indication information and the application layer measurement starting indication information. That is, the first access network device encapsulates the first indication information in a message that carries the application layer measurement starting indication information, and sends the message to the measurement collection entity. Optionally, if the first access network device determines, based on the application layer measurement identifier, the QoE reference corresponding to the application layer measurement identifier, the message 1 further includes the QoE reference. In this example, step 304 may be performed after step 303, or may be performed before step 303. This is not limited herein.

It should be noted that the application layer measurement result sent by the first access network device to the measurement collection entity may be the same as or different from the application layer measurement result received by the first access network device from the terminal device. In other words, the first access network device may forward, to the measurement collection entity, all of application layer measurement results that are about a service and that are received from the terminal device, or may forward only a part of the application layer measurement results to the measurement collection entity. For example, the first access network device receives measurement results of three application layer measurement metrics for the service from the terminal device, and the first access network device may send the measurement results of the three application layer measurement metrics to the measurement collection entity, or may select a measurement result of one application layer measurement metric or measurement results of two application layer measurement metrics based on a requirement of the measurement collection entity for sending to the measurement collection entity.

Optionally, the message 1 further includes a radio side measurement identifier, so that the measurement collection entity can learn of radio side measurement whose side measurement result should be associated with the application layer measurement.

It should be further noted that step 301 to step 304 are an application layer measurement procedure, and step 305 to step 311 to be described hereinafter are a radio side measurement procedure. A time sequence of the application layer measurement procedure and the radio side measurement procedure is not limited in this application. In other words, step 301 to step 304 may be performed first, and then step 305 to step 311 are performed; or step 305 to step 311 may be performed first, and then step 301 to step 304 are performed. In addition, step 301 to step 304 may alternatively be simultaneously performed in parallel with step 305 to step 311.

Step 305: The first access network device obtains radio side measurement configuration information of the first access network device from the CN/OAM/EM.

The radio side measurement configuration information is information that is determined by the network side and that is used by the access network device to configure the radio side measurement for the terminal device.

Optionally, the radio side measurement may be the minimization of drive tests (minimization of drive tests, MDT). Optionally, the MDT includes logged MDT and immediate MDT. The immediate MDT is mainly measurement performed by a terminal device in an RRC connected (RRC_CONNECTED) state, and is usually for measuring a data amount, an IP throughput rate, a packet transmission delay, a packet loss rate, a processing delay, and the like of the terminal device. The logged MDT is mainly measurement performed by a terminal device in an idle (RRC_IDLE) state or a terminal device in an RRC inactive (RRC_INACTIVE) state, and is usually used by the terminal device to measure received signal strength. For example, when the radio side measurement is the MDT, the radio side measurement may be at least one of the following:
(1) Signal level measurement: The terminal device measures a signal level of a radio signal, and sends a measurement result to the access network device.
(2) QoS measurement: The access network device may perform QoS measurement, for example, measure service traffic, measure a service throughput, and measure a service delay. Alternatively, the terminal device may perform measurement, for example, measure an uplink processing delay. Alternatively, the access network device and the terminal device may jointly perform measurement, for example, measure an air interface delay, that is, measure duration from a moment at which a data packet passes through an SDAP/PDCP layer of the access network device to a moment at which the data packet arrives at an SDAP/PDCP layer of the terminal device.
(3) Accessibility measurement: The terminal device records information about a radio resource control (radio resource control, RRC) connection establishment failure, and sends the information to the access network device.

It should be noted that, in this application, radio side measurement configuration information configured by the network side for the first access network device is referred to as the radio side measurement configuration information of the first access network device, and radio side measurement configuration information configured by the network side for the second access network device is referred to as radio side measurement configuration information of the second access network device. The radio side measurement configuration information of the first access network device may be the same as or different from the radio side measurement configuration information of the second access network device.

Specifically, in different scenarios, the first access network device may obtain the radio side measurement configuration information of the first access network device in different ways. The following provides descriptions with reference to several common examples.

For example, in a signaling based radio side measurement scenario (for example, in a signaling based MDT (signaling based MDT) scenario), the CN may send two sets of radio side measurement configuration information (including radio side measurement configuration information of the master access network device and radio side measurement configuration information of the secondary access network device) to the master access network device, and then the master access network device forwards the received radio side measurement configuration information of the secondary access network device to the secondary access network device. For example, in an (NG)EN-DC or NE-DC scenario, for example, the first access network device is the master access network device, and the second access network device is the secondary access network device. The CN may send two sets of radio side measurement configuration information (including the radio side measurement configuration information of the first access network device and the radio side measurement configuration information of the second access network device) to the first access network device, and then the first access network device forwards the received radio side measurement configuration information of the second access network device to the second access network device.

For example, in a signaling based radio side measurement scenario (for example, a signaling based MDT scenario), the CN may send one set of radio side measurement configuration information to the master access network device, and then the master access network device forwards the set of radio side measurement configuration information to the secondary access network device. For example, in an NR-DC scenario, for example, the first access network device is the master access network device, and the second access network device is the secondary access network device. The CN may send one set of radio side measurement configuration information to the first access network device, and then the first access network device forwards the received radio side measurement configuration information to the second access network device.

For example, in a management based radio side measurement scenario (for example, a management based MDT (management based MDT) scenario), the OAM may respectively send the radio side measurement configuration information to the first access network device and the second access network device. In other words, the first access network device receives the radio side measurement configuration information of the first access network device from the OAM, and the second access network device receives the radio side measurement configuration information of the second access network device from the OAM.

In the actual application, the first access network device may obtain the radio side measurement configuration information of the first access network device in any one of the foregoing manners. This is not limited herein.

Optionally, the radio side measurement configuration information includes a radio side measurement identifier and information related to a radio side measurement configuration. The information related to the radio side measurement configuration includes any one of a radio side measurement metric in the radio side measurement configuration, an event that needs to be measured and reported by the terminal device in the radio side measurement configuration, and a trigger condition corresponding to the event. For example, the radio side measurement configuration information of the first access network device includes a first radio side measurement identifier, and the first radio side measurement identifier identifies radio side measurement of the first access network device; and the radio side measurement configuration information of the second access network device includes a second radio side measurement identifier, and the second radio side measurement identifier identifies radio side measurement of the second access network device.

Optionally, the radio side measurement configuration includes at least one radio side measurement metric (Metric). For example, radio side measurement access stratum measurement metrics include metrics for reflecting radio signal quality (for example, reference signal received power (reference signal received power, RSRP), reference signal received quality (reference signal received quality, RSRQ), and a signal to interference plus noise ratio (signal to interference plus noise ratio, SINR)), a bit error rate, a block error rate, a delay, a throughput rate, a throughput, and radio load. This is not specifically limited herein.

Step 306: The first access network device sends a first radio side measurement configuration to the terminal device. Accordingly, the terminal device receives the first radio side measurement configuration from the first access network device.

The radio side measurement configuration is information that is determined by the network side and that is for measuring performance of providing a service for the terminal device by the at least one cell of the access network device. The first radio side measurement configuration is determined by the first access network device based on the radio side measurement configuration information of the first access network device. A second radio side measurement configuration to be described hereinafter is determined by the second access network device based on the radio side measurement configuration information of the second access network device. The radio side measurement configuration (for example, at least one radio side measurement metric configured by the network side for the first access network device) of the first access network device may be the same as or different from a radio side measurement configuration (for example, at least one radio side measurement metric configured by the network side for the second access network device) of the second access network device. For example, the network side may configure a total of four metrics: the RSRP, the SINR, the bit error rate, and the block error rate for both the first access network device and the second access network device. For another example, the network side may configure a total of four metrics: the RSRP, the SINR, the bit error rate, and the block error rate for the first access network device, and configure a total of three metrics: the RSRP, the SINR, and the block error rate for the second access network device.

It should be noted that step 306 in this embodiment is an optional step. When the radio side measurement metric in the radio side measurement configuration information of the first access network device does not need to be measured and reported by the terminal device, the first access network device does not need to send the first radio side measurement configuration to the terminal device, and the first access network device performs radio side measurement based on the received radio side measurement configuration information.

Step 307: The first access network device sends a radio side measurement result of the first access network device to a measurement collection entity. Accordingly, the measurement collection entity receives the radio side measurement result of the first access network device from the first access network device.

It should be noted that step 307 in this embodiment is an optional step.

For example, if a radio bearer of the service corresponding to the application layer measurement relates to only the second access network device and does not relate to the first access network device (for example, an RLC/MAC entity corresponding to the radio bearer of the service exists in only the second access network device), the first access network device does not perform step 307. That is, only the second access network device performs the radio side measurement. Further, only the second access network device sends a radio side measurement result of the second access network device to the measurement collection entity.

For example, if a radio bearer of the service corresponding to the application layer measurement relates to the first access network device (for example, an RLC/MAC entity corresponding to the radio bearer of the service exists in only the first access network device, or an RLC/MAC entity corresponding to the radio bearer of the service exists in both the first access network device and the second access network device), the first access network device is to perform step 307.

Specifically, when the first access network device sends the radio side measurement result of the first access network device to the measurement collection entity, the first access network device further includes the first radio side measurement identifier in a message that carries the radio side measurement result of the first access network device, where the first radio side measurement identifier indicates the radio side measurement result of the first access network device, so that the measurement collection entity can find the radio side measurement result of the first access network device when associating the application layer measurement result with the radio side measurement result of the first access network device.

It should be noted that the measurement collection entities in step 304 and step 307 may be the same or different. For example, the first access network device sends the application layer measurement result to the MCE, and the first access network device sends the radio side measurement result of the first access network device to the TCE.

Step 308: The first access network device sends second indication information to the second access network device. Accordingly, the second access network device receives the second indication information from the first access network device.

The second indication information indicates the second access network device to trigger, based on the second indication information, radio side measurement corresponding to the terminal device. In other words, the radio side measurement triggered based on the second indication information is radio side measurement for a terminal device (for example, a terminal device 1 that communicates with both the first access network device and the second access network device) in a plurality of terminal devices served by the second access network device. When the second access network device receives the radio side measurement configuration information, the second access network device does not immediately perform radio side measurement for the terminal device 1, but performs the radio side measurement for the terminal device 1 only when receiving the second indication information.

It should be noted that the first access network device may trigger, in any one of the following cases, sending of the second indication information to the second access network device.

In a possible example, the first access network device receives, from the terminal device, a message that carries the identification information (for example, the PDU session ID and/or the QoS flow ID) of the service of the application layer measurement, where the message further includes the application layer measurement result and/or the application layer measurement starting indication information. For example, when receiving the application layer measurement result and/or the application layer measurement starting indication information from the terminal device, the first access network device may obtain the identification information of the service of the application layer measurement, and the first access network device determines, based on the identification information of the service of the application layer measurement, that the service relates to the second access network device. Therefore, the first access network device triggers sending of the second indication information to the second access network device.

In this example, the second indication information may have only an indication function, that is, indicate the second access network device to start to perform radio side measurement when receiving the second indication information. In this case, the radio side measurement configuration information of the second access network device is sent by the first access network device to the second access network device via another message or signaling. In addition, in addition to having the indication function, the second indication information may further include information (for example, the radio side measurement configuration information, an MCE address and/or a TCE address, the QoE reference, and the identification information of the service of the application layer measurement) needed by the second access network device to perform radio side measurement.

In another possible example, the first access network device can obtain a radio bearer type of the service of the application layer measurement, and further determine, based on the radio bearer type, whether the service relates to the second access network device. When the first access network device determines that the service relates to the second access network device, the first access network device triggers sending of the second indication information to the second access network device.

In this example, in addition to having an indication function, the second indication information may further include information (for example, the radio side measurement configuration information, an MCE address and/or a TCE address, the QoE reference, and the identification information of the service of the application layer measurement) needed by the second access network device to perform radio side measurement.

In comparison with a solution in which the second access network device starts the radio side measurement when receiving the radio side measurement configuration information in a conventional technology, in this embodiment, the second access network device does not immediately trigger the radio side measurement procedure when receiving the radio side measurement configuration information, but triggers the radio side measurement procedure when receiving the second indication information. Therefore, the first access network device can control, based on the second indication information, synchronization between the radio side measurement of the second access network device and the application layer measurement of the terminal device, to avoid a case in which the second access network device starts, before the terminal device starts the application layer measurement procedure, to perform the radio side measurement procedure.

It should be noted that, when the second indication information has only the indication function, and does not include the information (for example, the radio side measurement configuration information, the MCE address and/or the TCE address, the QoE reference, and the identification information of the service of the application layer measurement) needed by the second access network device to perform radio side measurement, the second access network device is to perform step 309 to obtain the radio side measurement configuration information. A sequence of step 308 and step 309 is not limited in this application.

Optionally, after step 308, the second access network device sends the radio side measurement identifier of the second access network device to the first access network device.

Step 309: The second access network device obtains the radio side measurement configuration information of the second access network device from the CN/OAM/EM.

Step 309 is an optional step. When the second indication information does not include the information needed by the second access network device to perform radio side measurement, the second access network device obtains the radio side measurement configuration information in a manner in this step.

For explanations of the radio side measurement configuration information and the radio side measurement of the second access network device, refer to the related descriptions in step 305. Details are not described herein again.

Specifically, in different scenarios, the second access network device may obtain the radio side measurement configuration information in different ways. The following provides descriptions with reference to several common examples.

For example, in the signaling based radio side measurement scenario (for example, in the signaling based MDT (signaling based MDT) scenario), the CN may send two sets of radio side measurement configuration information (including the radio side measurement configuration information of the master access network device and the radio side measurement configuration information of the secondary access network device) to the master access network device, and then the master access network device forwards the received radio side measurement configuration information of the secondary access network device to the secondary access network device. For example, the second access network device is the master access network device, and the first access network device is the secondary access network device. The CN may send two sets of radio side measurement configuration information (including the radio side measurement configuration information of the first access network device and the radio side measurement configuration information of the second access network device) to the second access network device, and then the second access network device forwards the received radio side measurement configuration information of the first access network device to the first access network device.

For example, in the signaling based radio side measurement scenario (for example, the signaling based MDT scenario), the CN may send one set of radio side measurement configuration information to the master access network device, and then the master access network device forwards the set of radio side measurement configuration information to the secondary access network device. For example, in the NR-DC scenario, for example, the second access network device is the master access network device, and the first access network device is the secondary access network device. The CN may send one set of radio side measurement configuration information to the second access network device, and then the second access network device forwards the received radio side measurement configuration information to the first access network device.

For example, in the management based radio side measurement scenario (for example, the management based MDT (management based MDT) scenario), the OAM may respectively send the radio side measurement configuration information to the first access network device and the second access network device. In other words, the first access network device receives the radio side measurement configuration information from the OAM, and the second access network device receives the radio side measurement configuration information from the OAM.

In the actual application, the second access network device may obtain the radio side measurement configuration information in any one of the foregoing manners. This is not limited herein.

Step 310: The second access network device sends the second radio side measurement configuration to the terminal device. Accordingly, the terminal device receives the second radio side measurement configuration from the second access network device.

For explanations of the second radio side measurement configuration, refer to the related descriptions in step 306. Details are not described herein again.

It should be noted that step 310 in this embodiment is an optional step. When the radio side measurement metric in the radio side measurement configuration information of the second access network device does not need to be measured and reported by the terminal device, the second access network device does not need to send the second radio side measurement configuration to the terminal device, and the second access network device performs radio side measurement based on the received radio side measurement configuration information.

Step 311: The second access network device sends the radio side measurement result of the second access network device to a measurement collection entity. Accordingly, the measurement collection entity receives the radio side measurement result of the second access network device from the second access network device.

It should be noted that step 311 in this embodiment is an optional step.

For example, if the radio bearer of the service corresponding to the application layer measurement relates to only the first access network device and does not relate to the second access network device (for example, the RLC/MAC entity corresponding to the radio bearer of the service exists in only the first access network device), the second access network device does not perform step 311. That is, only the first access network device performs the radio side measurement. Further, only the first access network device sends the radio side measurement result of the first access network device to the measurement collection entity.

For example, if the radio bearer of the service corresponding to the application layer measurement relates to the second access network device (for example, the RLC/MAC entity corresponding to the radio bearer of the service exists in only the second access network device, or the RLC/MAC entity corresponding to the radio bearer of the service exists in both the first access network device and the second access network device), the second access network device is to perform step 311.

Specifically, when the second access network device sends the radio side measurement result of the second access network device to the measurement collection entity, the second access network device further includes the second radio side measurement identifier in a message that carries the radio side measurement result of the second access network device, where the second radio side measurement identifier indicates the radio side measurement result of the second access network device, so that the measurement collection entity can find the radio side measurement result of the second access network device when associating the application layer measurement result with the radio side measurement result of the second access network device.

It should be noted that the measurement collection entities in step 304 and step 311 may be the same or different. For example, the first access network device sends the application layer measurement result to the MCE, and the second access network device sends the radio side measurement result of the second access network device to the TCE.

Step 312: The measurement collection entity associates the application layer measurement result with the radio side measurement result of the first access network device based on the first indication information, and/or associates the application layer measurement result with the radio side measurement result of the second access network device based on the first indication information.

Specifically, a manner of processing the application layer measurement result and the radio side measurement result by the measurement collection entity varies with content indicated by the first indication information. For details, refer to the related descriptions in step 203. Details are not described herein again.

It should be noted that, for a relationship between the measurement collection entity MCE and the trace collection entity TCE in this embodiment, refer to the descriptions in FIG. 2.

In this embodiment, in a scenario in which the terminal device is connected to the first access network device and the second access network device (that is, in a dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate a radio side measurement result of an access network device with which the application layer measurement result is to be associated. Therefore, the measurement collection entity can accurately learn of, based on the first indication information, the radio side measurement result of the access network device with which the application layer measurement result is to be associated. In an MR-DC scenario, a service may have different bearer types. For example, some bearer types relate to radio transmission of one access network device, and the other bearer types relate to radio transmission of a plurality of access network devices. In this embodiment, the first access network device can notify, by using the first indication information, the measurement collection entity of to-be-associated radio side measurement results of access network devices, to better align or associate the application layer measurement result with the radio side measurement results. Further, the measurement collection entity can analyze, based on the association between the application layer measurement result and the radio side measurement results, whether degeneration or deterioration of the application layer measurement result is caused by degeneration or deterioration of the radio side measurement results. Further, the network side can better optimize a network to improve user experience.

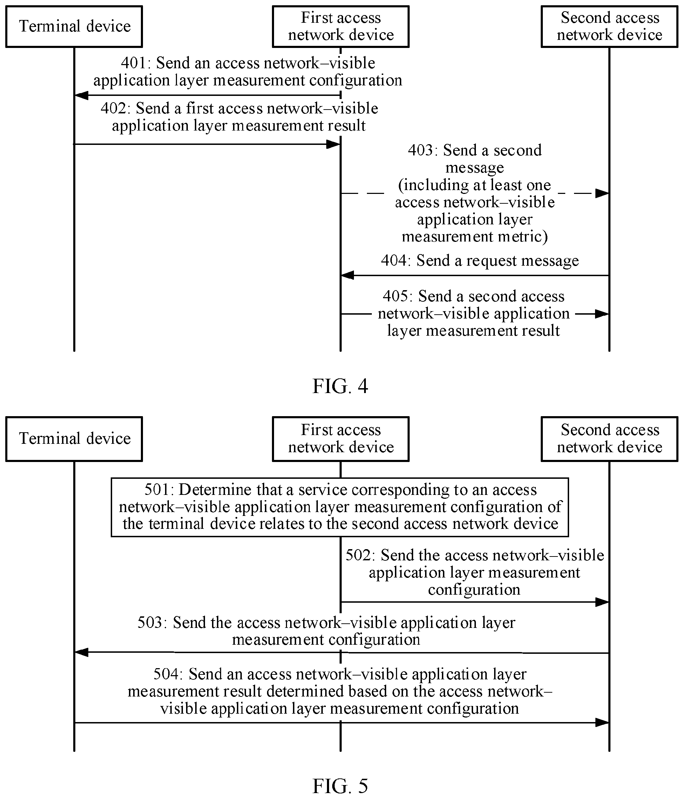

In addition, as shown in FIG. 4, this application further provides a communication method. In the method, a terminal device performs dual connectivity to a first access network device and a second access network device. The first access network device may be a master access network device (namely, a master node), or may be a secondary access network device (namely, a secondary node). For example, the first access network device is a master node, and the second access network device is a secondary node. For another example, the first access network device is a secondary node, and the second access network device is a master node. In this embodiment, which access network device in the first access network device and the second access network device is a master node is not limited. The first access network device and the second access network device are to perform the following steps.

Step 401: The first access network device sends an access network-visible application layer measurement configuration to the terminal device. Accordingly, the terminal device receives the access network-visible application layer measurement configuration from the first access network device.

The access network-visible application layer measurement configuration includes at least one access network-visible application layer measurement metric (RAN Visible QoE Metric), for example, a RAN-visible QoE measurement quantity or measurement metric. Optionally, the access network-visible application layer measurement configuration further includes a reporting periodicity of access network-visible application layer measurement. It should be understood that the access network-visible application layer measurement metric is similar to the application layer measurement metric in step 301. For details, refer to the descriptions of the application layer measurement metric in step 301. Details are not described herein again.

Optionally, a CN, an OAM, or an EM sends indication information #A to the first access network device, to indicate the at least one access network-visible application layer measurement metric (which may also be referred to as a RAN-available RAN-visible application layer measurement metric, Available RAN Visible QoE Metric) that may be configured by the first access network device. The at least one access network-visible application layer measurement metric is a part of application layer measurement metrics that are sent by the CN, the OAM, or the EM to the first access network device and that are to be measured by the terminal device in RAN-invisible application layer measurement. The first access network device determines, based on the indication information #A, the at least one access network-visible application layer measurement metric included in the access network-visible application layer measurement configuration. For example, the first access network device selects a part of access network-visible application layer measurement metrics from the indication information as the at least one access network-visible application layer measurement metric in the access network-visible application layer measurement configuration.

It should be noted that, before the first access network device sends the access network-visible application layer measurement configuration to the terminal device, or when the first access network device sends the access network-visible application layer measurement configuration to the terminal device, the first access network device may further send an access network-invisible application layer measurement configuration (namely, an application layer measurement configuration encapsulated in a container) to the terminal device.

Step 402: The terminal device sends a first access network-visible application layer measurement result to the first access network device. Accordingly, the first access network device receives the first access network-visible application layer measurement result from the terminal device.

It should be noted that the first access network-visible application layer measurement result is an access network-visible application layer measurement result received by the first access network device from the terminal device, and a second access network-visible application layer measurement result to be described in step 405 hereinafter is an application layer measurement result sent by the first access network device to the second access network device. The first access network-visible application layer measurement result may be the same as or different from the second access network-visible application layer measurement result.

For example, when the first access network device directly forwards, to the second access network device, the first access network-visible application layer measurement result received from the terminal device, the second access network-visible application layer measurement result is the same as the first access network-visible application layer measurement result. That is, content included in the second access network-visible application layer measurement result is the same as content included in the first access network-visible application layer measurement result.

For example, when the first access network device forwards, to the second access network device, some content in the first access network-visible application layer measurement result received from the terminal device, or the first access network device generates, based on content in the first access network-visible application layer measurement result, content different from the first access network-visible application layer measurement result, content included in the second access network-visible application layer measurement result sent by the first access network device to the second access network device is different from the content included in the first access network-visible application layer measurement result.

Optionally, a message that is sent by the terminal device to the first access network device and that carries the first access network-visible application layer measurement result further includes an application layer measurement identifier. In other words, when sending the first access network-visible application layer measurement result to the first access network device, the terminal device further reports the application layer measurement identifier.

Optionally, a message that is sent by the terminal device to the first access network device and that carries the first access network-visible application layer measurement result further includes identification information of a service of application layer measurement, for example, a PDU session ID and/or a QoS flow ID. In other words, when sending the first access network-visible application layer measurement result to the first access network device, the terminal device further reports the identification information of the service of the application layer measurement.

Optionally, before or when the terminal device sends the first access network-visible application layer measurement result to the first access network device, the terminal device may further send application layer measurement starting indication information to the first access network device, where the application layer measurement starting indication information indicates that the terminal device has started application layer measurement. Optionally, the application layer measurement starting indication information includes an application layer measurement identifier generated by the first access network device and/or identification information of a service of the application layer measurement.

In an implementation, after the first access network device receives the first access network-visible application layer measurement result or the application layer measurement starting indication information from the terminal device, after the first access network device sends the access network-invisible application layer measurement configuration to the terminal device, or after the first access network device sends the access network-visible application layer measurement configuration to the terminal device, the first access network device may directly perform step 405, may first perform step 404 and then perform step 405, or may first perform step 403 and then sequentially perform step 404 and step 405.

In another implementation, before the first access network device sends the access network-invisible application layer measurement configuration to the terminal device, or before the first access network device sends the access network-visible application layer measurement configuration to the terminal device, the first access network device may first perform step 404 and then sequentially perform step 401, step 402, and step 405, or may first perform step 403 and then sequentially perform step 404, step 401, step 402, and step 405.

Step 403: The first access network device sends a second message to the second access network device. Accordingly, the second access network device receives the second message from the first access network device.

In this embodiment, step 403 is an optional step. When the first access network device performs step 403, the first access network device may perform step 403 after step 402, may perform step 403 after step 401, or may perform step 403 before step 401 or step 402. In other words, a time sequence of step 402 and step 403 is not limited. In other words, the first access network device may first receive the first access network-visible application layer measurement result or the application layer measurement starting indication information from the terminal device, and then send the second message to the second access network device. Alternatively, the first access network device may first send the second message to the second access network device, and then receive the first access network-visible application layer measurement result or the application layer measurement starting indication information from the terminal device.

The second message includes at least one access network-visible application layer measurement metric that can be configured by the first access network device for the terminal device and/or at least one access network-visible application layer measurement metric that has been configured by the first access network device for the terminal device.

The access network-visible application layer measurement metric that has been configured by the first access network device for the terminal device may be understood as an access network-visible application layer measurement metric on which the first access network device has required the terminal device to perform application layer measurement. The access network-visible application layer measurement metrics that can be configured by the first access network device for the terminal device include the metric that the first access network device has required the terminal device to measure, may include a metric that the first access network device has not required the terminal device to measure, or may include the indication information #A received by the first access network device from the CN, the OAM, or the EM. At a future moment, the first access network device may require the terminal device to measure the metric that the first access network device has not required the terminal device to measure.

Generally, a quantity of the at least one access network-visible application layer measurement metric that can be configured by the first access network device for the terminal device is greater than or equal to a quantity of the at least one access network-visible application layer measurement metric that has been configured by the first access network device for the terminal device. For example, the first access network device can configure, for the terminal device, a total of three access network-visible application layer measurement metrics: a metric A, a metric B, and a metric C. However, based on a requirement of a network side, the first access network device configures only the metric A and the metric B for the terminal device, but does not configure the metric C. In this example, the access network-visible application layer measurement metrics that can be configured by the first access network device for the terminal device are the metric A, the metric B, and the metric C, and the access network-visible application layer measurement metrics that have been configured by the first access network device for the terminal device are the metric A and the metric B.

Optionally, the second message further includes at least one of the following:
at least one access network-visible application layer measurement metric that can be sent by the first access network device to the second access network device, identification information of a service corresponding to the second access network-visible application layer measurement result that can be sent by the first access network device to the second access network device, and identification information of a service corresponding to the at least one access network-visible application layer measurement metric that has been configured by the first access network device for the terminal device.

Optionally, the second message further includes the reporting periodicity of the access network-visible application layer measurement or the application layer measurement starting indication information. The reporting periodicity of the application layer measurement indicates a time interval at which the terminal device sends access network-visible application layer results to the first access network device twice.

Specifically, the first access network device may determine, in any one of the following implementations, that the second message needs to be sent.

In a possible implementation, the first access network device obtains the identification information of the service corresponding to the first access network-visible application layer measurement result, where the identification information of the service includes the identifier of a protocol data unit PDU session and/or an identifier of at least one quality of service QoS flow in the PDU session. The first access network device determines, based on the identification information of the service, that the second message needs to be sent.

For example, the first access network device can determine, based on the identification information of the service, whether a radio bearer of the service corresponding to the application layer measurement relates to the second access network device. If the radio bearer of the service corresponding to the application layer measurement relates to the second access network device (for example, an RLC/MAC entity corresponding to the radio bearer of the service exists in only the second access network device, or an RLC/MAC entity corresponding to the radio bearer of the service exists in both the first access network device and the second access network device), the first access network device determines that the second message needs to be sent.

In another possible implementation, the first access network device obtains a radio bearer type of the service corresponding to the first access network-visible application layer measurement result. The first access network device determines the second message based on the radio bearer type.

For explanations of the radio bearer type, refer to the related descriptions in step 201. Details are not described herein again.

For example, the first access network device can determine, based on the radio bearer type, whether a radio bearer of the service corresponding to the application layer measurement relates to the second access network device. If the radio bearer of the service corresponding to the application layer measurement relates to the second access network device (for example, an RLC/MAC entity corresponding to the radio bearer of the service exists in only the second access network device, or an RLC/MAC entity corresponding to the radio bearer of the service exists in both the first access network device and the second access network device), the first access network device determines that the second message needs to be sent.

In this embodiment, because the first access network device can send the second message to the second access network device, the second access network device may learn, based on the second message, of access network-visible application layer measurement metrics that can be learned of by the second access network device and services whose access network-visible application layer measurement metrics can be learned of by the second access network device. In this way, the second access network device can determine, based on a requirement of the second access network device and the second message, access network-visible application layer measurement metrics corresponding to measurement results that can be requested by the second access network device from the first access network device. In this way, a case in which the second access network device blindly requests, from the first access network device, a measurement result corresponding to an access network-visible application layer measurement metric can be reduced, and signaling exchange between the second access network device and the first access network device can be reduced.

Step 404: The second access network device sends a request message to the first access network device. Accordingly, the first access network device receives the request message from the second access network device.

The request message is for requesting the first access network device to send a measurement result of the at least one access network-visible application layer measurement metric to the second access network device. It may be understood that the second access network device requests, by using the request message, the first access network device to provide the second access network device with the measurement result (namely, the second access network-visible application layer measurement result) that is of the one or more access network-visible application layer measurement metrics and that is needed by the second access network device. Optionally, the request message includes the at least one access network-visible application layer measurement metric. Optionally, the request message includes identification information of a service, and the identification information of the service includes an identifier of a protocol data unit PDU session and/or an identifier of at least one quality of service QoS flow in the PDU session, to indicate services corresponding to measurement results that are of access network-visible application layer measurement metrics and that the first access network device is requested to send to the second access network device.

It should be noted that the access network-visible application layer measurement result sent by the first access network device to the second access network device is referred to as the second access network-visible application layer measurement result hereinafter. The second access network-visible application layer measurement result is determined based on the first access network-visible application layer measurement result and the second access network-visible application layer measurement metric. Specifically, a difference between the first access network-visible application layer measurement result and the second access network-visible application layer measurement result is described in detail in step 402. Details are not described herein again.

In this embodiment, there is no specific limitation on a time sequence of step 401 and step 404. In other words, the first access network device may first receive the first access network-visible application layer measurement result from the terminal device, and then receive the request message from the second access network device. Alternatively, the first access network device may first receive the request message from the second access network device, and then receive the first access network-visible application layer measurement result from the terminal device. Alternatively, the first access network device may receive the request message from the second access network device when receiving the first access network-visible application layer measurement result from the terminal device. This is not specifically limited herein.

In this embodiment, step 404 is an optional step.

Step 405: The first access network device sends the second access network-visible application layer measurement result to the second access network device. Accordingly, the second access network device receives the second access network-visible application layer measurement result from the first access network device.

In an implementation, after the first access network device receives the request message from the second access network device, the first access network device can send the second access network-visible application layer measurement result to the second access network device based on the request message from the second access network device. Specifically, the first access network device determines the second access network-visible application layer measurement result based on the first access network-visible application layer measurement result obtained from the terminal device and the at least one access network-visible application layer measurement metric carried in the request message. Further, the first access network device sends the second access network-visible application layer measurement result to the second access network device.

In a possible example, the first access network device calculates an intersection of an access network-visible application layer measurement result corresponding to the at least one access network-visible application layer measurement metric carried in the request message and the first access network-visible application layer measurement result, to obtain the second access network-visible application layer measurement result. For example, the request message carries a metric A and a metric B, and is for requesting a measurement result of the metric A and a measurement result of the metric B; and first access network-visible application layer measurement results include the measurement result of the metric B and a measurement result of a metric C. In this case, the first access network device determines that the second access network-visible application layer measurement result is the measurement result of the metric B. That is, the first access network device sends the measurement result of the metric B to the second access network device.

Optionally, if the first access network device may further receive a third message from the second access network device before performing step 404, where the third message is for notifying the first network device to cancel feeding back the second access network-visible application layer measurement metric to the second access network device, the first access network device may cancel sending the second access network-visible application layer measurement metric to the second access network device.

Optionally, if the first access network device determines that the application layer measurement of the terminal device has ended, the first access network device may send a fourth message to the second access network device, where the fourth message indicates that the access network-visible application layer measurement has stopped.

In another implementation, the first access network device obtains the identification information of the service corresponding to the first access network-visible application layer measurement result, where the identification information of the service includes the identifier of the protocol data unit PDU session and/or the identifier of the at least one quality of service QoS flow in the PDU session. The first access network device determines, based on the identification information of the service, that the second access network-visible application layer measurement result needs to be sent.

For example, the first access network device can determine, based on the identification information of the service, whether the radio bearer of the service corresponding to the application layer measurement relates to the second access network device. If the radio bearer of the service corresponding to the application layer measurement relates to the second access network device (for example, the RLC/MAC entity corresponding to the radio bearer of the service exists in only the second access network device, or the RLC/MAC entity corresponding to the radio bearer of the service exists in both the first access network device and the second access network device), the first access network device determines that the second access network-visible application layer measurement result needs to be sent.

In another possible implementation, the first access network device obtains the radio bearer type of the service corresponding to the first access network-visible application layer measurement result. The first access network device determines, based on the radio bearer type, that the second access network-visible application layer measurement result needs to be sent.

For the explanations of the radio bearer type, refer to the related descriptions in step 201. Details are not described herein again.

For example, the first access network device can determine, based on the radio bearer type, whether the radio bearer of the service corresponding to the application layer measurement relates to the second access network device. If the radio bearer of the service corresponding to the application layer measurement relates to the second access network device (for example, the RLC/MAC entity corresponding to the radio bearer of the service exists in only the second access network device, or the RLC/MAC entity corresponding to the radio bearer of the service exists in both the first access network device and the second access network device), the first access network device determines that the second access network-visible application layer measurement result needs to be sent.

Optionally, the first access network device further sends, to the second access network device, the identification information of the service corresponding to the second access network-visible application layer measurement result. Optionally, the first access network device sends, to the second access network device, DRB identification information corresponding to the identification information of the service corresponding to the second access network-visible application layer measurement result.

In this embodiment, the first access network device and the second access network device can negotiate, by using signaling (for example, the request message and the second message), the measurement result that is of the access network-visible application layer measurement metric and that is needed by the second access network device, so that the first access network device can send, to the second access network device based on the access network-visible application layer measurement result (namely, the first access network-visible application layer measurement result) received from the terminal device, the access network-visible application layer measurement result (namely, the second access network-visible application layer measurement result) needed by the second access network device. This helps reduce signaling overheads caused by obtaining, by the second access network device from the terminal device, the access network-visible application layer measurement result needed by the second access network device, and also helps the first access network device send, to the second access network device based on the requirement of the second access network device, the access network-visible application layer measurement result needed by the second access network device, to reduce overheads of interaction between the first access network device and the second access network device. In addition, the first access network device may determine, depending on whether the radio bearer of the service corresponding to the first access network-visible application layer measurement result relates to the second access network device, whether to send the access network-visible application layer measurement result to the second access network device, to reduce the overheads of the interaction between the first access network device and the second access network device.

In addition, as shown in FIG. 5, this application further provides a communication method. In the method, a terminal device performs dual connectivity to a first access network device and a second access network device. The first access network device may be a master access network device (namely, a master node), or may be a secondary access network device (namely, a secondary node). For example, the first access network device is a master node, and the second access network device is a secondary node. For another example, the first access network device is a secondary node, and the second access network device is a master node. In this embodiment, which access network device in the first access network device and the second access network device is a master node is not limited. The first access network device and the second access network device are to perform the following steps.

Step 501: The first access network device determines that a service corresponding to an access network-visible application layer measurement configuration of the terminal device relates to the second access network device.

Specifically, the first access network device may determine, in any one of the following implementations, that the service corresponding to the access network-visible application layer measurement configuration relates to the second access network device, that is, determine that a radio bearer of the service corresponding to the access network-visible application layer measurement configuration relates to the second access network device.

In a possible implementation, the first access network device obtains, from the terminal device, identification information of the service corresponding to the access network-visible application layer measurement configuration, where the identification information of the service includes an identifier of a protocol data unit PDU session and/or an identifier of at least one quality of service QoS flow in the PDU session. In this case, the first access network device determines, based on the identification information of the service, that the service corresponding to the access network-visible application layer measurement configuration relates to the second access network device, that is, determines that the radio bearer of the service corresponding to the access network-visible application layer measurement configuration relates to the second access network device.

In another possible implementation, the first access network device obtains a radio bearer type of the service corresponding to the access network-visible application layer measurement configuration of the terminal device. In this case, when the radio bearer type indicates that an access network device corresponding to the radio bearer for communicating the service includes the second access network device, the first access network device determines that the service corresponding to the application layer measurement configuration relates to the second access network device, that is, determines that the radio bearer of the service corresponding to the access network-visible application layer measurement configuration relates to the second access network device.

In a possible example of this implementation, the first access network device determines the radio bearer type of the service based on identification information of the service, where the identification information of the service includes an identifier of a protocol data unit PDU session and/or an identifier of at least one quality of service QoS flow in the PDU session.

In addition, for determining that the radio bearer of the service corresponding to the access network-visible application layer measurement configuration relates to the second access network device, refer to the descriptions in the foregoing embodiment.

When the first access network device determines that the service corresponding to the access network-visible application layer measurement configuration of the terminal device relates to the second access network device, the first access network device performs step 502.

Step 502: The first access network device sends the access network-visible application layer measurement configuration to the second access network device. Accordingly, the second access network device receives the access network-visible application layer measurement configuration from the first access network device.

The access network-visible application layer measurement configuration includes at least one access network-visible application layer measurement metric.

When the first access network device determines that the service corresponding to the access network-visible application layer measurement configuration of the terminal device relates to the second access network device, the first access network device sends the at least one access network-visible application layer measurement metric to the second access network device. It may be understood as that the first access network device notifies the second access network device of application layer measurement metrics whose measurement may be configured for the terminal device.

Optionally, the at least one access network-visible application layer measurement metric sent by the first access network device to the second access network device may be understood as at least one access network-visible application layer measurement metric that can be configured by the second access network device for the terminal device, for example, may be indication information #A received by the first access network device from a CN, an OAM, or an EM.

Step 503: The second access network device sends the access network-visible application layer measurement configuration to the terminal device. Accordingly, the terminal device receives the access network-visible application layer measurement configuration from the second access network device.

Because the access network-visible application layer measurement configuration includes the at least one access network-visible application layer measurement metric, this step may alternatively be understood as follows: The second access network device sends the at least one access network-visible application layer measurement metric to the terminal device. Accordingly, the terminal device receives the at least one access network-visible application layer measurement metric from the second access network device. For specific explanations of the access network-visible application layer measurement configuration and application layer measurement metric, refer to the related descriptions in step 401 in the embodiment corresponding to FIG. 4. Details are not described herein again.

Optionally, the second access network device may further send, to the terminal device, an application layer measurement identifier (which may be referred to as an application layer measurement identifier #1 in this embodiment) allocated by the first access network device to application layer measurement. In this way, the terminal device can learn, based on the application layer measurement identifier, of the application layer measurement corresponding to access network-visible application layer measurement that corresponds to the access network-visible application layer measurement configuration. When the terminal device sends, to the second access network device, an access network-visible application layer measurement result corresponding to the access network-visible application layer measurement configuration, the terminal device further sends the application layer measurement identifier #1. Further, optionally, the second access network device may send, to the terminal device, an application layer measurement identifier (which may be referred to as an application layer measurement identifier #2 in this embodiment) allocated by the second access network device to the access network-visible application layer measurement configuration. When the terminal device sends, to the second access network device, the access network-visible application layer measurement result corresponding to the access network-visible application layer measurement configuration, the terminal device further sends the application layer measurement identifier #2. Optionally, when an access stratum of the terminal device and an application layer of the terminal device exchange the access network-visible application layer measurement configuration and the access network-visible application layer measurement result, the application layer measurement identifier #1 and the application layer measurement identifier #2 are further carried. It should be understood that at least one access network-visible application layer measurement metric sent by the second access network device to the terminal device may be the same as or different from the at least one access network-visible application layer measurement metric sent by the first access network device to the second access network device.

In a possible example, the second access network device determines the at least one access network-visible application layer measurement metric based on the at least one access network-visible application layer measurement metric received from the first access network device and a requirement of the second access network device. For example, the second access network device receives a metric A, a metric B, and a metric C from the first access network device, but the second access network device needs only a measurement result of the metric C. In this case, the second access network device sends only the metric C to the terminal device, so that the terminal device measures the metric C.

Optionally, the second access network device may directly send the access network-visible application layer measurement configuration to the terminal device. For example, the second access network device directly sends an RRC message #1 to the terminal device, where the RRC message #1 carries the access network-visible application layer measurement configuration. Alternatively, the second access network device may first send the access network-visible application layer measurement configuration to the first access network device, and then the first access network device forwards the access network-visible application layer measurement configuration to the terminal device. For example, the second access network device generates an RRC message #2, where the RRC message #2 carries the access network-visible application layer measurement configuration. The second access network device sends the RRC message #2 to the first access network device. The first access network device further generates an RRC message #3, where the RRC message #3 carries the RRC message #2. The first access network device sends the RRC message #3 to the terminal device.

Step 504: The terminal device sends, to the second access network device, the access network-visible application layer measurement result determined based on the access network-visible application layer measurement configuration. Accordingly, the second access network device receives, from the terminal device, the access network-visible application layer measurement result determined based on the access network-visible application layer measurement configuration.

Optionally, the terminal device may directly send the access network-visible application layer measurement result to the second access network device. For example, the terminal device directly sends an RRC message #4 to the second access network device, where the RRC message #4 carries the access network-visible application layer measurement result. Alternatively, the terminal device may first send the access network-visible application layer measurement result to the first access network device, and then the first access network device forwards the access network-visible application layer measurement result to the second access network device. For example, the terminal device generates an RRC message #5, where the RRC message #5 carries the access network-visible application layer measurement result. The terminal device further generates an RRC message #6, where the RRC message #6 carries the RRC message #5. The terminal device sends the RRC message #6 to the first access network device. After receiving the RRC message #6, the first access network device forwards the RRC message #5 in the RRC message #6 to the second access network device.

In this embodiment, the first access network device can send the access network-visible application layer measurement configuration (including the at least one access network-visible application layer measurement metric) to the second access network device, and the second access network device determines which access network-visible application layer measurement metrics are to be configured for the terminal device. Therefore, on a basis of ensuring that an application layer measurement configuration (for example, an access network-invisible application layer measurement configuration) has been configured for the terminal device, the second access network device can flexibly configure the access network-visible application layer measurement based on the requirement of the second access network device. This helps reduce signaling overheads between the first access network device and the terminal device, and reduce signaling overheads caused by sending, by the first access network device, the access network-visible application layer measurement result to the second access network device.

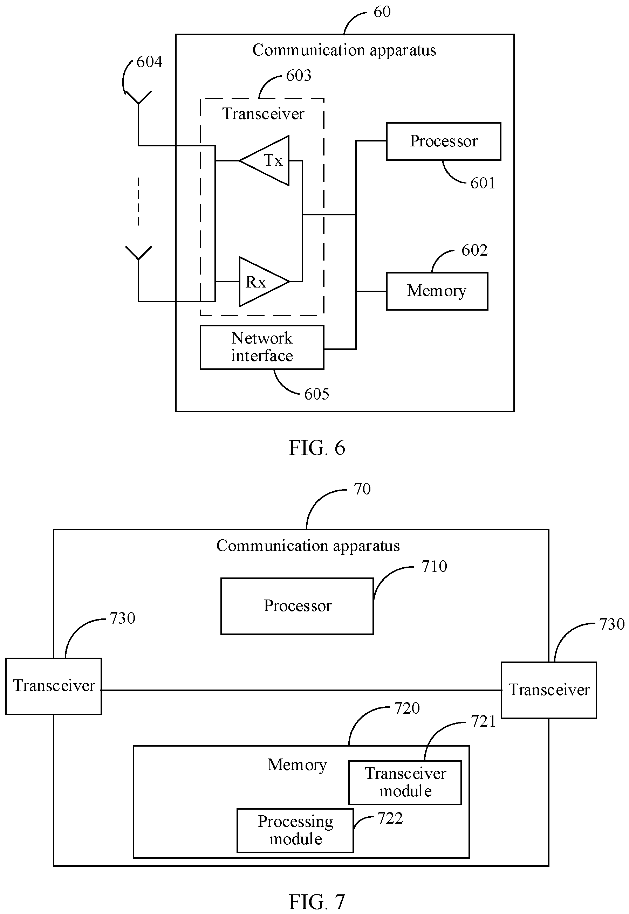

FIG. 6 is a diagram of a structure of a communication apparatus 60 according to an embodiment. It should be understood that the first access network device or the second access network device in the method embodiments corresponding to FIG. 2, FIG. 3A, FIG. 3B, FIG. 4, and FIG. 5 may be based on the structure of the communication apparatus 60 shown in FIG. 6 in this embodiment. A terminal device can communicate with both the first access network device and the second access network device. That is, the terminal device performs dual connectivity to the first access network device and the second access network device. It should be further understood, that when an access network device or a base station of a subsequently evolved standard performs the method in embodiments of this application, the access network or the base station of the subsequently evolved standard may also use the structure of the communication apparatus 60 shown in FIG. 6 in this embodiment.

The communication apparatus 60 includes at least one processor 601, at least one memory 602, at least one transceiver 603, at least one network interface 605, and one or more antennas 604. The processor 601, the memory 602, the transceiver 603, and the network interface 605 are connected via a connection apparatus, and the antenna 604 is connected to the transceiver 603. The connection apparatus may include various types of interfaces, transmission cables, buses, or the like. This is not limited in this embodiment.

In this embodiment, the memory 602 is mainly configured to store software program and data. The memory 602 may exist independently, and is connected to the processor 601. Optionally, the memory 602 and the processor 601 may be integrated, for example, integrated into one or more chips. The memory 602 can store program code for executing the technical solutions in embodiments of this application, and the processor 601 controls the execution. Various types of executed computer program code may also be considered as drivers of the processor 601. It should be understood that FIG. 6 in this embodiment shows only one memory and one processor. However, during actual application, the communication apparatus 60 may include a plurality of processors or a plurality of memories. This is not specifically limited herein. In addition, the memory 602 may also be referred to as a storage medium, a storage device, or the like. The memory 602 may be a storage element (namely, an on-chip storage element) located on a same chip as the processor, or may be an independent storage element. This is not limited in this embodiment of this application.

In this embodiment, the transceiver 603 may be configured to support receiving or sending of a radio frequency signal between the communication apparatus 60 and the terminal device, and the transceiver 603 may be connected to the antenna 604. The transceiver 603 includes a transmitter Tx and a receiver Rx. Specifically, the one or more antennas 604 may receive the radio frequency signal. The receiver Rx in the transceiver 603 is configured to: receive the radio frequency signal from the antenna 604, convert the radio frequency signal into a digital baseband signal or a digital intermediate frequency signal, and provide the digital baseband signal or the digital intermediate frequency signal for the processor 601, so that the processor 601 further processes the digital baseband signal or the digital intermediate frequency signal, for example, performs demodulation processing and decoding processing. In addition, the transmitter Tx in transceiver 603 is further configured to: receive a modulated digital baseband signal or digital intermediate frequency signal from the processor 601, convert the modulated digital baseband signal or digital intermediate frequency signal into a radio frequency signal, and send the radio frequency signal through the one or more antennas 604. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 603 may also be referred to as a transceiver unit, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like.

In addition, the network interface 605 is configured to enable the communication apparatus 60 to connect to another communication apparatus through a communication link. Specifically, the network interface 605 may include a network interface between the communication apparatus 60 and a core network element, for example, an S1 interface. Alternatively, the network interface 605 may include a network interface between the communication apparatus 60 and another network device (for example, another access network device or a core network element), for example, an X2 interface or an Xn interface.

In addition, the processor 601 is mainly configured to process a communication protocol and communication data, control an entire network device, execute a software program, and process data of the software program, for example, configured to support the communication apparatus 60 in performing an action described in the foregoing embodiments. The communication apparatus 60 may include a baseband processor and a central processing unit. The baseband processor is mainly configured to process the communication protocol and the communication data. The central processing unit is mainly configured to control the entire communication apparatus 60, execute the software program, and process the data of the software program. Functions of the baseband processor and the central processing unit may be integrated into the processor 601 in FIG. 6. A person skilled in the art may understand that the baseband processor and the central processing unit may alternatively be processors independent of each other, and are interconnected by using a technology such as a bus. A person skilled in the art may understand that the communication apparatus 60 may include a plurality of baseband processors to adapt to different network standards, the communication apparatus 60 may include a plurality of central processing units to enhance a processing capability of the communication apparatus 60, and components in the communication apparatus 60 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the memory in a form of the software program. The processor executes the software program to implement a baseband processing function.

Specifically, when the communication apparatus 60 serves as the first access network device to perform the method in the embodiment corresponding to FIG. 2 or FIG. 3A and FIG. 3B, the processor 601 in the communication apparatus 60 is configured to determine first indication information. The transceiver 603 in the communication apparatus 60 is configured to send the first indication information to a measurement collection entity, where the first indication information indicates to associate an application layer measurement result from a terminal device with a radio side measurement result of the first access network device, and/or the first indication information indicates to associate the application layer measurement result with a radio side measurement result of a second access network device.

In this embodiment, in a scenario in which the terminal device is connected to the first access network device and the second access network device (that is, in a dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate a radio side measurement result of an access network device with which the application layer measurement result is to be associated. Therefore, the measurement collection entity can accurately learn of, based on the first indication information, the radio side measurement result of the access network device with which the application layer measurement result is to be associated.

In a possible implementation, the transceiver 603 is further configured to obtain, from the terminal device, identification information of a service corresponding to the application layer measurement result, where the identification information of the service includes an identifier of a protocol data unit PDU session and/or an identifier of at least one quality of service QoS flow in the PDU session. In addition, the processor 601 is further configured to determine the first indication information based on the identification information of the service.

In a possible implementation, the transceiver 603 is further configured to obtain a radio bearer type of a service corresponding to the application layer measurement result. In addition, the processor 601 is further configured to determine the first indication information based on the radio bearer type.

Optionally, the first indication information is located in a first message, and the first message includes a quality of experience QoE reference configured by a core network device or a network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the first indication information includes the radio bearer type of the service corresponding to the application layer measurement result, and the radio bearer type includes a master cell group bearer, a secondary cell group bearer, or a split bearer.

In a possible implementation, the first indication information includes an identifier of the first access network device and/or an identifier of the second access network device.

In a possible implementation, the first indication information includes information indicating one access network device or information indicating two access network devices.

In a possible implementation, the transceiver 603 is further configured to send second indication information to the second access network device, where the second indication information indicates the second access network device to trigger radio side measurement based on the second indication information.

In a possible implementation, the second indication information includes a radio side measurement configuration corresponding to the radio side measurement result.

Specifically, when the communication apparatus 60 serves as the first access network device to perform the method in the embodiment corresponding to FIG. 4, the transceiver 603 in the communication apparatus 60 is configured to obtain a first access network-visible application layer measurement result from a terminal device. The processor 601 is configured to send a second access network-visible application layer measurement result to a second access network device based on a request message from the second access network device, where the request message is for requesting a second access network-visible application layer measurement metric corresponding to the second access network-visible application layer measurement result, and the second access network-visible application layer measurement result is determined based on the first access network-visible application layer measurement result and the second access network-visible application layer measurement metric.

In a possible implementation, the transceiver 603 is further configured to send a second message to the second access network device, where the second message includes at least one access network-visible application layer measurement metric that can be configured by the first access network device for the terminal device and/or at least one access network-visible application layer measurement metric that has been configured by the first access network device for the terminal device.

Optionally, the second message further includes a reporting periodicity of access network-visible application layer measurement or application layer measurement starting indication information.

In a possible implementation, the transceiver 603 is further configured to receive a third message from the second access network device, where the third message is for notifying the first network device to cancel feeding back the second access network-visible application layer measurement metric to the second access network device.

In a possible implementation, the transceiver 603 is further configured to send a fourth message to the second access network device, where the fourth message indicates that the access network-visible application layer measurement has been stopped.

In a possible implementation, the transceiver 603 is further configured to obtain identification information of a service corresponding to the first access network-visible application layer measurement result, where the identification information of the service includes an identifier of a protocol data unit PDU session and/or an identifier of at least one quality of service QoS flow in the PDU session. The processor 601 is further configured to determine the second message based on the identification information of the service.

In a possible implementation, the transceiver 603 is further configured to obtain a radio bearer type of a service corresponding to the first access network-visible application layer measurement result. The processor 601 is further configured to determine the second message based on the radio bearer type.

Specifically, when the communication apparatus 60 serves as the second access network device to perform the method in the embodiment corresponding to FIG. 4, the processor 601 in the communication apparatus 60 is configured to generate a request message. The transceiver 603 is configured to send the request message to a first access network device, where the request message is for requesting a second access network-visible application layer measurement metric. The transceiver 603 is further configured to receive a second access network-visible application layer measurement result from the first access network device, where the second access network-visible application layer measurement result is determined based on a first access network-visible application layer measurement result from a terminal device and the second access network-visible application layer measurement metric.

In a possible implementation, the transceiver 603 is further configured to receive a second message from the first access network device, where the second message includes at least one access network-visible application layer measurement metric that can be configured by the first access network device for the terminal device and/or at least one access network-visible application layer measurement metric that has been configured by the first access network device for the terminal device.

Optionally, the second message further includes a reporting periodicity of access network-visible application layer measurement or application layer measurement starting indication information.

In a possible implementation, the transceiver 603 is further configured to send a third message to the second access network device, where the third message is for notifying the first network device to cancel feeding back the second access network-visible application layer measurement metric to the second access network device.

In a possible implementation, the transceiver 603 is further configured to receive a fourth message from the first access network device, where the fourth message indicates that the access network-visible application layer measurement has been stopped.

Specifically, when the communication apparatus 60 serves as the first access network device to perform the method in the embodiment corresponding to FIG. 5, the processor 601 in the communication apparatus 60 is configured to determine that a service corresponding to an access network-visible application layer measurement configuration of a terminal device relates to a second access network device. The transceiver 603 is configured to send at least one access network-visible application layer measurement metric of the terminal device to the second access network device.

In a possible implementation, the transceiver 603 is further configured to obtain, from the terminal device, identification information of the service corresponding to the access network-visible application layer measurement configuration, where the identification information of the service includes an identifier of a protocol data unit PDU session and/or an identifier of at least one quality of service QoS flow in the PDU session. The processor 601 is specifically configured to determine, based on the identification information of the service, that the service corresponding to the access network-visible application layer measurement configuration relates to the second access network device.

In a possible implementation, the transceiver 603 is further configured to obtain a radio bearer type of the service corresponding to the access network-visible application layer measurement configuration of the terminal device. The processor 601 is specifically configured to: when the radio bearer type indicates that an access network device corresponding to a radio bearer for communicating the service includes the second access network device, determine that the service corresponding to the application layer measurement configuration relates to the second access network device.

In a possible implementation, the processor 601 is specifically configured to determine the radio bearer type of the service based on identification information of the service, where the identification information of the service includes an identifier of a protocol data unit PDU session and/or an identifier of at least one quality of service QoS flow in the PDU session.

Specifically, when the communication apparatus 60 serves as the second access network device to perform the method in the embodiment corresponding to FIG. 5, the transceiver 603 in the communication apparatus 60 is configured to receive at least one access network-visible application layer measurement metric of a terminal device from a first access network device, where the terminal device is connected to the first access network device and the second access network device. The transceiver 603 is further configured to send the at least one access network-visible application layer measurement metric to the terminal device. The transceiver 603 is further configured to receive, from the terminal device, an access network-visible application layer measurement result determined based on the at least one access network-visible application layer measurement metric.

For other details, refer to the method of the first access network device or the second access network device in the foregoing embodiments. Details are not described herein again.

FIG. 7 is a diagram of a structure of another communication apparatus 70 according to an embodiment. It should be understood that the core network device in the method embodiment corresponding to FIG. 2 or FIG. 3A and FIG. 3B may be based on the structure of the communication apparatus 70 shown in FIG. 70 in this embodiment. As shown in FIG. 7, the communication apparatus 70 may include a processor 710, a memory 720, and transceivers 730. The processor 710 is coupled and connected to the memory 720, and the processor 710 is coupled and connected to the transceivers 730.

The transceivers 730 may also be referred to as transceiver units, transceiver apparatuses, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like.

The processor 710 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 710 may be one processor, or may include a plurality of processors. This is not specifically limited herein.

In addition, the memory 720 is mainly configured to store a software program and data. The memory 720 may exist independently, and is connected to the processor 710. Optionally, the memory 720 and the processor 710 may be integrated, for example, integrated into one or more chips. The memory 720 can store program code for executing the technical solutions in embodiments of this application, and the processor 710 controls the execution. Various types of executed computer program code may also be considered as drivers of the processor 710. The memory 720 may include a volatile memory (volatile memory), for example, a random access memory (random access memory, RAM); the memory may also include a non-volatile memory (non-volatile memory), for example, a read-only memory (read-only memory, ROM), a flash memory (flash memory), a hard disk drive (hard disk drive, HDD), or a solid-state drive (solid-state drive, SSD); and the memory 720 may further include a combination of the foregoing types of memories. The memory 720 may be one memory, or may include a plurality of memories. For example, the memory 720 is configured to store various data, for example, a first reference location and a first distance threshold. In addition, the memory 720 is further configured to store first rule information, second rule information, third rule information, fourth rule information, and the like. For details, refer to the related descriptions in the foregoing embodiments. Details are not described herein again.

In an implementation, the memory 720 stores computer-readable instructions, where the computer-readable instructions include a plurality of software modules, for example, a transceiver module 721 and a processing module 722. After executing each software module, the processor 710 may perform a corresponding operation based on an indication of each software module. In this embodiment, an operation performed by a software module is actually an operation performed by the processor 710 based on an indication of the software module.

Specifically, the communication apparatus 70 is configured to perform the method of the measurement collection entity MCE or the trace collection entity TCE in the embodiment corresponding to FIG. 2 or FIG. 3A and FIG. 3B. In this case, main functions of the transceiver module 721 and the processing module 722 in the communication apparatus 70 are as follows:
The transceiver module 721 is configured to receive first indication information from a first access network device, where the first indication information indicates to associate an application layer measurement result from a terminal device with a radio side measurement result of the first access network device, and/or the first indication information indicates to associate the application layer measurement result with a radio side measurement result of a second access network device; and the terminal device is separately connected to the first access network device and the second access network device. The processing module 722 is configured to associate the application layer measurement result with the radio side measurement result of the first access network device based on the first indication information, and/or associating the application layer measurement result with the radio side measurement result of the second access network device based on the first indication information.

In a possible implementation, the first indication information is located in a first message, and the first message includes a quality of experience QoE reference configured by a core network device or a network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the transceiver module 721 is further configured to: when the first indication information indicates to associate the application layer measurement result with the radio side measurement result of the second access network device, receive, from the second access network device, the quality of experience QoE reference configured by the core network device or the network management device and the radio side measurement result determined by the second access network device based on a radio side measurement configuration.

In a possible implementation, the first indication information includes a radio bearer type of a service corresponding to the application layer measurement result, and the radio bearer type includes a master cell group bearer, a secondary cell group bearer, or a split bearer.

For example, the processing module 722 is specifically configured to: when the first indication information includes the master cell group bearer, associate the application layer measurement result with a radio side measurement result of a master access network device in the first access network device and the second access network device;
for example, the processing module 722 is specifically configured to: when the first indication information includes the secondary cell group bearer, associate the application layer measurement result with a radio side measurement result of a secondary access network device in the first access network device and the second access network device; or
for example, the processing module 722 is specifically configured to: when the first indication information includes the split bearer, separately associate the application layer measurement result with the radio side measurement result of the first access network device and the radio side measurement result of the second access network device.

In a possible implementation, the first indication information includes an identifier of the first access network device and/or an identifier of the second access network device.

For example, the processing module 722 is specifically configured to: when the first indication information includes the identifier of the first access network device, associate the application layer measurement result with the radio side measurement result of the first access network device;
for example, the processing module 722 is specifically configured to: when the first indication information includes the identifier of the second access network device, associate the application layer measurement result with the radio side measurement result of the second access network device; or
for example, the processing module 722 is specifically configured to: when the first indication information includes the identifier of the first access network device and the identifier of the second access network device, separately associate the application layer measurement result with the radio side measurement result of the first access network device and the radio side measurement result of the second access network device.

In a possible implementation, the first indication information includes information indicating one access network device or information indicating two access network devices.

For example, the processing module 722 is specifically configured to: when the first indication information includes the information indicating one access network device, associate the application layer measurement result with the radio side measurement result of the first access network device or the second access network device; or
for example, the processing module 722 is specifically configured to: when the first indication information includes the information indicating two access network devices, associate the application layer measurement result with the radio side measurement results of the first access network device and the second access network device.

It should be noted that, for a specific implementation and beneficial effects of this embodiment, refer to the method of the measurement collection entity MCE or the trace collection entity TCE in the foregoing embodiments. Details are not described herein again.

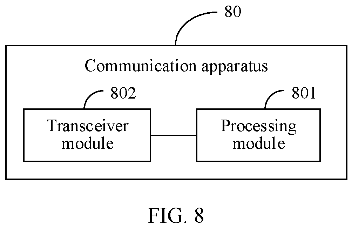

FIG. 8 is a diagram of a structure of another communication apparatus 80 according to an embodiment. The communication apparatus 80 may be the first access network device or the second access network device in the method embodiments corresponding to FIG. 2, FIG. 3A, FIG. 3B, FIG. 4, and FIG. 5, or may be a chip in the first access network device or a chip in the second access network device in the method embodiments corresponding to FIG. 2, FIG. 3A, FIG. 3B, FIG. 4, and FIG. 5. A terminal device can communicate with both the first access network device and the second access network device. That is, the terminal device performs dual connectivity to the first access network device and the second access network device. It should be further understood, that when an access network device or a base station of a subsequently evolved standard performs the method in embodiments of this application, the access network or the base station of the subsequently evolved standard may also use the structure of the communication apparatus 80 shown in FIG. 8 in this embodiment.

The communication apparatus 80 includes a processing module 801 and a transceiver module 802.

Specifically, when the communication apparatus 80 serves as the first access network device to perform the method in the embodiment corresponding to FIG. 2 or FIG. 3A and FIG. 3B, the processing module 801 in the communication apparatus 80 is configured to determine first indication information. The transceiver module 802 in the communication apparatus 80 is configured to send the first indication information to a measurement collection entity, where the first indication information indicates to associate an application layer measurement result from a terminal device with a radio side measurement result of the first access network device, and/or the first indication information indicates to associate the application layer measurement result with a radio side measurement result of a second access network device.

In this embodiment, in a scenario in which the terminal device is connected to the first access network device and the second access network device (that is, in a dual-connectivity DC scenario), the first access network device can send the first indication information to the measurement collection entity after receiving the application layer measurement result, where the first indication information indicates to associate the application layer measurement result with the radio side measurement result of the first access network device, and/or the first indication information indicates to associate the application layer measurement result with the radio side measurement result of the second access network device. In other words, the first indication information can indicate a radio side measurement result of an access network device with which the application layer measurement result is to be associated. Therefore, the measurement collection entity can accurately learn of, based on the first indication information, the radio side measurement result of the access network device with which the application layer measurement result is to be associated.

In a possible implementation, the transceiver module 802 is further configured to obtain, from the terminal device, identification information of a service corresponding to the application layer measurement result, where the identification information of the service includes an identifier of a protocol data unit PDU session and/or an identifier of at least one quality of service QoS flow in the PDU session. In addition, the processing module 801 is further configured to determine the first indication information based on the identification information of the service.

In a possible implementation, the transceiver module 802 is further configured to obtain a radio bearer type of a service corresponding to the application layer measurement result. In addition, the processing module 801 is further configured to determine the first indication information based on the radio bearer type.

Optionally, the first indication information is located in a first message, and the first message includes a quality of experience QoE reference configured by a core network device or a network management device.

In a possible implementation, when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further includes a radio side measurement identifier of the radio side measurement result of the first access network device.

In a possible implementation, the first indication information includes the radio bearer type of the service corresponding to the application layer measurement result, and the radio bearer type includes a master cell group bearer, a secondary cell group bearer, or a split bearer.

In a possible implementation, the first indication information includes an identifier of the first access network device and/or an identifier of the second access network device.

In a possible implementation, the first indication information includes information indicating one access network device or information indicating two access network devices.

In a possible implementation, the transceiver module 802 is further configured to send second indication information to the second access network device, where the second indication information indicates the second access network device to trigger radio side measurement based on the second indication information.

In a possible implementation, the second indication information includes a radio side measurement configuration corresponding to the radio side measurement result.

Specifically, when the communication apparatus 80 serves as the first access network device to perform the method in the embodiment corresponding to FIG. 4, the transceiver module 802 in the communication apparatus 80 is configured to obtain a first access network-visible application layer measurement result from a terminal device. The processing module 801 is configured to send a second access network-visible application layer measurement result to a second access network device based on a request message from the second access network device, where the request message is for requesting a second access network-visible application layer measurement metric corresponding to the second access network-visible application layer measurement result, and the second access network-visible application layer measurement result is determined based on the first access network-visible application layer measurement result and the second access network-visible application layer measurement metric.

In a possible implementation, the transceiver module 802 is further configured to send a second message to the second access network device, where the second message includes at least one access network-visible application layer measurement metric that can be configured by the first access network device for the terminal device and/or at least one access network-visible application layer measurement metric that has been configured by the first access network device for the terminal device.

Optionally, the second message further includes a reporting periodicity of access network-visible application layer measurement or application layer measurement starting indication information.

In a possible implementation, the transceiver module 802 is further configured to receive a third message from the second access network device, where the third message is for notifying the first network device to cancel feeding back the second access network-visible application layer measurement metric to the second access network device.

In a possible implementation, the transceiver module 802 is further configured to send a fourth message to the second access network device, where the fourth message indicates that the access network-visible application layer measurement has been stopped.

In a possible implementation, the transceiver module 802 is further configured to obtain identification information of a service corresponding to the first access network-visible application layer measurement result, where the identification information of the service includes an identifier of a protocol data unit PDU session and/or an identifier of at least one quality of service QoS flow in the PDU session. The processing module 801 is further configured to determine the second message based on the identification information of the service.

In a possible implementation, the transceiver module 802 is further configured to obtain a radio bearer type of a service corresponding to the first access network-visible application layer measurement result. The processing module 801 is further configured to determine the second message based on the radio bearer type.

Specifically, when the communication apparatus 80 serves as the second access network device to perform the method in the embodiment corresponding to FIG. 4, the processing module 801 in the communication apparatus 80 is configured to generate a request message. The transceiver module 802 is configured to send the request message to a first access network device, where the request message is for requesting a second access network-visible application layer measurement metric. The transceiver module 802 is further configured to receive a second access network-visible application layer measurement result from the first access network device, where the second access network-visible application layer measurement result is determined based on a first access network-visible application layer measurement result from a terminal device and the second access network-visible application layer measurement metric.

In a possible implementation, the transceiver module 802 is further configured to receive a second message from the first access network device, where the second message includes at least one access network-visible application layer measurement metric that can be configured by the first access network device for the terminal device and/or at least one access network-visible application layer measurement metric that has been configured by the first access network device for the terminal device.

Optionally, the second message further includes a reporting periodicity of access network-visible application layer measurement or application layer measurement starting indication information.

In a possible implementation, the transceiver module 802 is further configured to send a third message to the second access network device, where the third message is for notifying the first network device to cancel feeding back the second access network-visible application layer measurement metric to the second access network device.

In a possible implementation, the transceiver module 802 is further configured to receive a fourth message from the first access network device, where the fourth message indicates that the access network-visible application layer measurement has been stopped.

Specifically, when the communication apparatus 80 serves as the first access network device to perform the method in the embodiment corresponding to FIG. 5, the processing module 801 in the communication apparatus 80 is configured to determine that a service corresponding to an access network-visible application layer measurement configuration of a terminal device relates to a second access network device. The transceiver module 802 is configured to send at least one access network-visible application layer measurement metric of the terminal device to the second access network device.

In a possible implementation, the transceiver module 802 is further configured to obtain, from the terminal device, identification information of the service corresponding to the access network-visible application layer measurement configuration, where the identification information of the service includes an identifier of a protocol data unit PDU session and/or an identifier of at least one quality of service QoS flow in the PDU session. The processing module 801 is specifically configured to determine, based on the identification information of the service, that the service corresponding to the access network-visible application layer measurement configuration relates to the second access network device.

In a possible implementation, the transceiver module 802 is further configured to obtain a radio bearer type of the service corresponding to the access network-visible application layer measurement configuration of the terminal device. The processing module 801 is specifically configured to: when the radio bearer type indicates that an access network device corresponding to a radio bearer for communicating the service includes the second access network device, determine that the service corresponding to the application layer measurement configuration relates to the second access network device.

In a possible implementation, the processing module 801 is specifically configured to determine the radio bearer type of the service based on identification information of the service, where the identification information of the service includes an identifier of a protocol data unit PDU session and/or an identifier of at least one quality of service QoS flow in the PDU session.

Specifically, when the communication apparatus 80 serves as the second access network device to perform the method in the embodiment corresponding to FIG. 5, the transceiver module 802 in the communication apparatus 80 is configured to receive at least one access network-visible application layer measurement metric of a terminal device from a first access network device, where the terminal device is connected to the first access network device and the second access network device. The transceiver module 802 is further configured to send the at least one access network-visible application layer measurement metric to the terminal device. The transceiver module 802 is further configured to receive, from the terminal device, an access network-visible application layer measurement result determined based on the at least one access network-visible application layer measurement metric.

For other details, refer to the method of the first access network device or the second access network device in the foregoing embodiments. Details are not described herein again.

In an implementation process, the steps in the foregoing methods may be completed by using an integrated logic circuit of hardware in the processor, or by using instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory, and completes the steps in the foregoing methods in combination with hardware of the processor. To avoid repetition, details are not described herein again.

In addition, this application provides a computer program product. The computer program product includes one or more computer instructions. When the computer program instructions are loaded and executed on a computer, all or some of the procedures or functions according to embodiments of this application are generated. For example, the method related to the access network device (for example, the first access network device or the second access network device) in FIG. 2, FIG. 3A and FIG. 3B, FIG. 4, or FIG. 5 is implemented. For another example, a method related to the measurement collection entity MCE or the trace collection entity TCE in FIG. 2 is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program. The computer program is executed by a processor to implement the method related to the access network device (for example, the first access network device or the second access network device) in FIG. 2, FIG. 3A and FIG. 3B, FIG. 4, or FIG. 5.

In addition, this application further provides a computer-readable storage medium. The storage medium stores a computer program. The computer program is executed by a processor to implement the method related to the measurement collection entity MCE or the trace collection entity TCE in FIG. 2.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A communication method, comprising: sending, by a first access network device, first indication information to a measurement collection entity, wherein the first indication information indicates to associate an application layer measurement result from a terminal device with a radio side measurement result of the first access network device, and/or the first indication information indicates to associate the application layer measurement result with a radio side measurement result of a second access network device; and the terminal device is separately connected to the first access network device and the second access network device.

2. The method according to claim 1, wherein before the sending, by a first access network device, first indication information to a measurement collection entity, the method further comprises:
obtaining, by the first access network device from the terminal device, identification information of a service corresponding to the application layer measurement result, wherein the identification information of the service comprises an identifier of a protocol data unit PDU session and/or an identifier of at least one quality of service QoS flow in the PDU session; and
determining, by the first access network device, the first indication information based on the identification information of the service.

3. The method according to claim 1, wherein before the sending, by a first access network device, first indication information to a measurement collection entity, the method further comprises:
obtaining, by the first access network device, a radio bearer type of a service corresponding to the application layer measurement result; and
determining, by the first access network device, the first indication information based on the radio bearer type.

4. The method according to any one of claims 1 to 3, wherein the first indication information is located in a first message, and the first message comprises a quality of experience QoE reference configured by a core network device or a network management device.

5. The method according to claim 4, wherein when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further comprises a radio side measurement identifier of the radio side measurement result of the first access network device.

6. The method according to any one of claims 1 to 5, wherein the first indication information comprises the radio bearer type of the service corresponding to the application layer measurement result, and the radio bearer type comprises a master cell group bearer, a secondary cell group bearer, or a split bearer.

7. The method according to any one of claims 1 to 5, wherein the first indication information comprises an identifier of the first access network device and/or an identifier of the second access network device.

8. The method according to any one of claims 1 to 5, wherein the first indication information comprises information indicating one access network device or information indicating two access network devices.

9. The method according to any one of claims 1 to 8, wherein the method further comprises:
sending, by the first access network device, second indication information to the second access network device, wherein the second indication information indicates the second access network device to trigger radio side measurement based on the second indication information.

10. The method according to claim 9, wherein the second indication information comprises a radio side measurement configuration corresponding to the radio side measurement result.

11. A communication method, comprising:
receiving, by a measurement collection entity, first indication information from a first access network device, wherein the first indication information indicates to associate an application layer measurement result from a terminal device with a radio side measurement result of the first access network device, and/or the first indication information indicates to associate the application layer measurement result with a radio side measurement result of a second access network device; and the terminal device is separately connected to the first access network device and the second access network device; and
associating, by the measurement collection entity, the application layer measurement result with the radio side measurement result of the first access network device based on the first indication information, and/or associating the application layer measurement result with the radio side measurement result of the second access network device based on the first indication information.

12. The method according to claim 11, wherein the first indication information is located in a first message, and the first message comprises a quality of experience QoE reference configured by a core network device or a network management device.

13. The method according to claim 12, wherein when the first indication information indicates to associate the application layer measurement result with the radio side measurement result of the first access network device or the first indication information indicates to separately associate the application layer measurement result with the radio side measurement result of the first access network device and the radio side measurement result of the second access network device, the first message further comprises a radio side measurement identifier of the radio side measurement result of the first access network device.

14. The method according to any one of claims 11 to 13, wherein the method further comprises:
when the first indication information indicates to associate the application layer measurement result with the radio side measurement result of the second access network device, receiving, by the measurement collection entity from the second access network device, the quality of experience QoE reference configured by the core network device or the network management device and the radio side measurement result determined by the second access network device based on a radio side measurement configuration.

15. The method according to any one of claims 11 to 14, wherein the first indication information comprises a radio bearer type of a service corresponding to the application layer measurement result, and the radio bearer type comprises a master cell group bearer, a secondary cell group bearer, or a split bearer; and
the associating, by the measurement collection entity, the application layer measurement result with the radio side measurement result of the first access network device based on the first indication information, and/or associating the application layer measurement result with the radio side measurement result of the second access network device based on the first indication information comprises:
when the first indication information comprises the master cell group bearer, associating, by the measurement collection entity, the application layer measurement result with a radio side measurement result of a master access network device in the first access network device and the second access network device;
when the first indication information comprises the secondary cell group bearer, associating, by the measurement collection entity, the application layer measurement result with a radio side measurement result of a secondary access network device in the first access network device and the second access network device; or
when the first indication information comprises the split bearer, separately associating, by the measurement collection entity, the application layer measurement result with the radio side measurement result of the first access network device and the radio side measurement result of the second access network device.

16. The method according to any one of claims 11 to 14, wherein the first indication information comprises an identifier of the first access network device and/or an identifier of the second access network device; and
the associating, by the measurement collection entity, the application layer measurement result with the radio side measurement result of the first access network device based on the first indication information, and/or associating the application layer measurement result with the radio side measurement result of the second access network device based on the first indication information comprises:
when the first indication information comprises the identifier of the first access network device, associating, by the measurement collection entity, the application layer measurement result with the radio side measurement result of the first access network device;
when the first indication information comprises the identifier of the second access network device, associating, by the measurement collection entity, the application layer measurement result with the radio side measurement result of the second access network device; or
when the first indication information comprises the identifier of the first access network device and the identifier of the second access network device, separately associating, by the measurement collection entity, the application layer measurement result with the radio side measurement result of the first access network device and the radio side measurement result of the second access network device.

17. The method according to any one of claims 11 to 14, wherein the first indication information comprises information indicating one access network device or information indicating two access network devices; and
the associating, by the measurement collection entity, the application layer measurement result with the radio side measurement result of the first access network device based on the first indication information, and/or associating the application layer measurement result with the radio side measurement result of the second access network device based on the first indication information comprises:
when the first indication information comprises the information indicating one access network device, associating, by the measurement collection entity, the application layer measurement result with the radio side measurement result of the first access network device or the second access network device; or
when the first indication information comprises the information indicating two access network devices, associating, by the measurement collection entity, the application layer measurement result with the radio side measurement results of the first access network device and the second access network device.

18. A communication method, comprising:
obtaining, by a first access network device, a first access network-visible application layer measurement result from a terminal device, wherein the terminal device is separately connected to the first access network device and a second access network device; and
sending, by the first access network device, a second access network-visible application layer measurement result to the second access network device based on a request message from the second access network device, wherein the request message is for requesting a second access network-visible application layer measurement metric corresponding to the second access network-visible application layer measurement result, and the second access network-visible application layer measurement result is determined based on the first access network-visible application layer measurement result and the second access network-visible application layer measurement metric.

19. A communication method, comprising:
sending, by a second access network device, a request message to a first access network device, wherein the request message is for requesting a second access network-visible application layer measurement metric; and
receiving, by the second access network device, a second access network-visible application layer measurement result from the first access network device, wherein the second access network-visible application layer measurement result is determined based on a first access network-visible application layer measurement result from a terminal device and the second access network-visible application layer measurement metric, and the terminal device is separately connected to the first access network device and the second access network device.

20. A communication method, comprising:
determining, by a first access network device, that a service corresponding to an access network-visible application layer measurement configuration of a terminal device relates to a second access network device, wherein the terminal device is separately connected to the first access network device and the second access network device; and
sending, by the first access network device, at least one access network-visible application layer measurement metric of the terminal device to the second access network device.

21. A communication method, comprising:
receiving, by a second access network device, at least one access network-visible application layer measurement metric of a terminal device from a first access network device, wherein the terminal device is separately connected to the first access network device and the second access network device;
sending, by the second access network device, the at least one access network-visible application layer measurement metric to the terminal device; and
receiving, by the second access network device from the terminal device, an access network-visible application layer measurement result determined based on the at least one access network-visible application layer measurement metric.

22. A communication apparatus, comprising a processor and a memory, wherein
the memory stores a computer program; and
the processor invokes the computer program, to enable the communication apparatus to perform the method according to any one of claims 1 to 10 or the method according to any one of claims 18 to 21.

23. A communication apparatus, comprising a processor and a memory, wherein
the memory stores a computer program; and
the processor invokes the computer program, to enable the communication apparatus to perform the method according to any one of claims 11 to 17.

24. A computer-readable storage medium, storing instructions, wherein when the instructions are run on a computer, the computer is enabled to perform the method according to any one of claims 1 to 10, the method according to any one of claims 11 to 17, or the method according to any one of claims 18 to 21.
